# EUROPÄISCHE PATENTSCHRIFT

(11) **EP 2 782 516 B1**
(45) Veröffentlichungstag und Bekanntmachung des Hinweises auf die Patenterteilung: **03.05.2017**
(21) Anmeldenummer: 12794241.5
(22) Anmeldetag: 21.11.2012
(51) Int. Cl.: A61C 1/00, F16H 1/32, F16H 35/02, F16H 19/08

(54) **ANTRIEBSVORRICHTUNG FÜR EIN MEDIZINISCHES, INSBESONDERE DENTALES ODER CHIRURGISCHES, WERKZEUG**
DRIVE DEVICE FOR A MEDICAL TOOL, IN PARTICULAR FOR A DENTAL OR SURGICAL TOOL
DISPOSITIF D'ENTRAÎNEMENT POUR UN INSTRUMENT MÉDICAL, NOTAMMENT DENTAIRE OU CHIRURGICAL

(30) Priorität: 21.11.2011 EP 11189869; 21.11.2011 US 201161562375 P; 16.03.2012 EP 12159781
(43) Veröffentlichungstag der Anmeldung: 01.10.2014
(73) Patentinhaber: W & H Dentalwerk Bürmoos GmbH, 5111 Bürmoos (AT)
(72) Erfinder: EDER, Karlheinz, 5112 Lamprechtshausen (AT); ROTHENWÄNDER, Michael, 5114 Göming (AT); SPITZAUER, Josef, 5110 Loipferding (AT)
(74) Vertreter: Benda, Ralf
(86) Internationale Anmeldenummer: PCT/EP2012/073144
(87) Internationale Veröffentlichungsnummer: WO 2013/076106

(56) Entgegenhaltungen:
- EP-A2- 1 078 606
- WO-A1-2011/089348
- US-A- 2 374 718
- US-A- 2 538 620
- US-A- 4 834 652
- US-A- 5 584 689
- US-B1- 6 293 795

## Beschreibung

Die vorliegende Erfindung betrifft eine Antriebsvorrichtung für ein medizinisches, insbesondere dentales oder chirurgisches, Werkzeug, die ausgebildet ist, eine unidirektionale Drehbewegung in eine mehr-direktionale Bewegung zu wandeln, um das Werkzeug mit dieser mehr-direktionale Bewegung zu betreiben.

Eine Antriebsvorrichtung, die eine unidirektionale Drehbewegung in eine mehr-direktionale Bewegung in Form einer simultanen oder überlagerten Hub- und drehzahlreduzierten Drehbewegung wandelt, ist aus der Patentanmeldung WO 2011/089348 A1 bekannt. Diese in einem gewinkelten Handstück angeordnete Antriebsvorrichtung umfasst eine mit einem Motor verbindbare Antriebswelle zur Übertragung einer unidirektionalen Rotationsbewegung, ein mehrstufiges Planetengetriebe zum Verringern der Drehzahl der Rotationsbewegung, eine Welle zum Übertragen der drehzahlreduzierten Rotationsbewegung sowie eine Exzenterwelle zum Erzeugen der Hubbewegung.

Diese Antriebsvorrichtung weist eine Vielzahl von Nachteilen auf: Um die Drehzahl der Drehbewegung merklich zu reduzieren, sind mehrere, zum Beispiel drei, hintereinander angeordnete Planetengetriebe vorgesehen, wodurch ein erheblicher Raumbedarf entsteht. Aufgrund dieses großen Raumbedarfs können die Planetengetriebe nur in dem vom Kopfteil des gewinkelten Handstück entfernten und durch eine Biegung oder einen Winkel getrennten rückwärtigen Abschnitt des Handstücks angeordnet werden, siehe Figur 1 der WO 2011/089348 A1. Damit ist es jedoch wiederum notwendig in der Biegung des Handstücks zwei Getriebe vorzusehen, ein Erstes zur Übertragung der drehzahl-reduzierten Drehbewegung der Planetengetriebe und ein Zweites zur Übertragung der Drehbewegung auf die Exzenterwelle. Schließlich bedingt die Verwendung mehrerer Planetengetriebe ein Vielzahl von Einzelbauteilen und demgemäß einen hohen Fertigungs- und Montageaufwand.

Es wäre somit wünschenswert, eine Antriebsvorrichtung ohne die oben genannten Nachteile zu schaffen, die eine unidirektionale Drehbewegung in eine mehr-direktionale Bewegung in Form einer, vorzugsweise simultanen oder überlagerten, Hub- und Drehbewegung wandelt, wobei vorzugsweise die Drehzahl der Drehbewegung verändert, insbesondere reduziert, ist. Die Antriebsvorrichtung soll insbesondere möglichst kompakt sein, wenig Raumbedarf aufweisen, aus einer geringen Zahl von Einzelteilen bestehen, hohe Drehzahlreduktionen ermöglichen und vorzugsweise zwischen dem Winkel und dem Kopfteil des gewinkelten Handstücks anordenbar sein.

Das Patent US 2,538,620 offenbart Vorrichtungen zum Honen und Feinschleifen bzw. eine Waschmaschine, die jeweils eine Antriebsvorrichtung aufweisen, die eine undirektionale Rotationsbewegung in eine mehr-direktionale Drehbewegung in Form einer oszillierenden Rotationsbewegung wandelt.

Das Patent US 2,374,718 offenbart eine Maschine zum Gewindeschneiden oder Schrauben mit einer Antriebsvorrichtung, die eine undirektionale Rotationsbewegung in eine mehr-direktionale Drehbewegung in Form einer oszillierenden Rotationsbewegung wandelt.

Eine andere Antriebsvorrichtung, die eine mehr-direktionale Bewegung in Form einer mehrdirektionalen Drehbewegung erzeugt, ist aus dem Patent US 6,293,795 B1 bekannt. Diese Antriebsvorrichtung umfasst ein, insbesondere endodontisches, Handstück mit einem Werkzeug, zum Beispiel einer endodontischen Feile, die von einem Elektromotor angetrieben wird. Eine elektrische Steuervorrichtung einschließlich eines Mikrokontrollers betreibt den Elektromotor derart, dass die Feile eine mehr-direktionale Drehbewegung in Form einer oszillierenden Rotationsbewegung durchläuft. Die oszillierende Rotationsbewegung umfasst abwechselnd eine Rotation des Werkzeugs in eine erste Drehrichtung um einen ersten Drehwinkel und in eine zweite, entgegengesetzte Drehrichtung um einen zweiten Drehwinkel, wobei der erste und der zweite Drehwinkel unterschiedliche Beträge aufweisen. Durch die oszillierende Rotationsbewegung soll Gewebe, insbesondere Gewebe des Zahnwurzelkanals, vorzugsweise durch Drehung des Werkzeugs in eine Drehrichtung, abgetragen und, vorzugsweise durch Drehung des Werkzeugs in die entgegengesetzte Drehrichtung, in Richtung der Zahnkrone gefördert werden.

Ein Nachteil dieser Antriebsvorrichtung besteht darin, dass zum Betrieb des Werkzeugs eine elektrische Steuervorrichtung einschließlich eines Mikrokontrollers benötigt wird. Es entsteht damit ein für die Realisierung der oszillierenden Rotationsbewegung notwendiger, erheblicher zusätzlicher technischer und finanzieller Aufwand, insbesondere für Anwender, die eine ausschließlich pneumatisch betriebene Behandlungsvorrichtung haben.

Demgemäß wäre es wünschenswert, eine alternative Antriebsvorrichtung zu schaffen, die ein medizinisches, insbesondere dentales oder chirurgisches, Werkzeug in eine oszillierende Rotationsbewegung versetzt und die insbesondere auch mit ausschließlich pneumatisch betriebenen Behandlungsvorrichtungen verwendet werden kann.

Gemäß einem Ausführungsbeispiel, das nicht Gegenstand der Ansprüche ist, ist eine medizinische, insbesondere dentale oder chirurgische, Behandlungsvorrichtung, vorgesehen, die umfasst: Eine Antriebswelle, die zur Übertragung einer unidirektionalen Rotationsbewegung ausgebildet ist, eine Werkzeughaltevorrichtung zum Halten eines Werkzeugs, die derart in einem Kopfteil der Behandlungsvorrichtung angeordnet ist, dass sie in eine, vorzugsweise simultane, Hub- und Drehbewegung versetzbar ist, sowie eine mechanische Getriebeanordnung, die ausgebildet ist, die unidirektionale Rotationsbewegung in eine, vorzugsweise simultane, Hub- und Drehbewegung zu wandeln, so dass die Werkzeughaltevorrichtung in eine, vorzugsweise simultane, Hub- und Drehbewegung versetzbar ist, wobei die Getriebeanordnung ein Getriebe zur Veränderung, insbesondere Reduktion, der Drehzahl der unidirektionalen Rotationsbewegung und ein Exzentergetriebe aufweist. Das Getriebe zur Veränderung der Drehzahl der unidirektionalen Rotationsbewegung weist auf: Eine Eingangswelle mit einer Rotationsachse, eine mit der Werkzeughaltevorrichtung verbundene Ausgangswelle, einen mit der Eingangswelle verbundenen Fortsatz mit einer Mittelachse, wobei die Mittelachse gewinkelt zur Rotationsachse der Eingangswelle angeordnet ist, eine drehfest angeordnete erste Zahnreihe mit mehreren Zähnen, eine drehbar angeordnete und mit der Ausgangswelle verbundene zweite Zahnreihe mit mehreren Zähnen, eine drehbar auf dem mit der Eingangswelle verbundenen Fortsatz angeordnete Hülse, die an ihrem ersten Ende eine dritte Zahnreihe und an ihrem zweiten Ende eine vierte Zahnreihe aufweist, wobei die Hülse derart zwischen der ersten Zahnreihe und der zweiten Zahnreihe angeordnet ist, dass zumindest ein Zahn der dritten Zahnreihe mit zumindest einem Zahn der ersten Zahnreihe und zumindest ein Zahn der vierten Zahnreihe mit zumindest einem Zahn der zweiten Zahnreihe kämmt, um eine Veränderung der Drehzahl der Ausgangswelle relativ zur Eingangswelle zu bewirken.

Ein derart aufgebautes Getriebe zur Veränderung der Drehzahl der unidirektionalen Rotationsbewegung ist sehr kompakt und weist einen geringen Raumbedarf auf, wodurch es einfacher in eine medizinische, insbesondere dentale oder chirurgische, Behandlungsvorrichtung, insbesondere in ein Hand- oder Winkelstück, integrierbar ist. Es besteht aus einer vergleichsweise geringen Anzahl von Einzelteilen und es ermöglicht insbesondere einen weiten Bereich von Drehzahlreduktionen, zum Beispiel beginnend bei 1 : 25 bis zu sehr hohen Untersetzungen von zum Beispiel 1 : 900 oder mehr.

Besonders vorteilhafte Ausführungsformen dieser Behandlungsvorrichtung umfassen einzeln oder in Kombination, dass:
- auf dem mit der Eingangswelle verbundenen Fortsatz zumindest eine Lagervorrichtung vorgesehen ist, so dass die auf dem Fortsatz angeordnete Hülse relativ zum Fortsatz drehbar ist, wobei insbesondere ein Ende des Fortsatzes als freies Ende ausgebildet ist, das sich frei und ungelagert über die Lagervorrichtung hinaus in Richtung der Werkzeughaltevorrichtung erstreckt.
- der von der Mittelachse des mit der Eingangswelle verbundenen Fortsatzes und der Rotationsachse der Eingangswelle eingeschlossene Winkel in etwa 5° - 15° beträgt.
- der von dem mit der Eingangswelle verbundenen Fortsatz und der Eingangswelle eingeschlossene Winkel in etwa 5° - 15° beträgt.
- bezogen auf die Mittelachse die axiale Länge des mit der Eingangswelle verbundenen Fortsatzes in etwa 3 - 7 mm beträgt.
- die Lagervorrichtung auf dem mit der Eingangswelle verbundenen Fortsatz als Wälzlager, insbesondere als Kugellager, oder als Gleitlager ausgebildet ist.
- die Lagervorrichtung den mit der Eingangswelle verbundenen Fortsatz radial umgibt.
- die Lagervorrichtung zwischen dem mit der Eingangswelle verbundenen Fortsatz und der auf dem Fortsatz angeordnete Hülse angeordnet ist.
- die Behandlungsvorrichtung oder das Getriebe zur Veränderung der Drehzahl der unidirektionalen Rotationsbewegung einen scheiben- oder plattenförmigen Träger mit einer ersten Grundfläche und einer im Wesentlichen parallel zur ersten Grundfläche angeordneten zweiten Grundfläche umfasst, wobei an der ersten Grundfläche die drehfest angeordnete erste Zahnreihe derart vorgesehen ist, dass ihre Zähne in Richtung der zweiten Zahnreihe weisen, und wobei vorzugsweise die zweite Grundfläche als Lagersitz für ein die Eingangswelle lagerndes Lagerelement, insbesondere ein Wälz- oder Kugellager, ausgebildet ist.
- die drehfest angeordnete erste Zahnreihe einteilig mit dem plattenförmigen Träger ausgebildet ist.
- der plattenförmige Träger an einem drehfesten Bauteil der Behandlungsvorrichtung, insbesondere an der Außenhülse der Behandlungsvorrichtung, befestigt ist, vorzugsweise mittels einer Schulter oder einem Rücksprung an einer entsprechenden Schulter oder einem entsprechenden Vorsprung der Behandlungsvorrichtung.
- das Lagerelement direkt an der zweiten Grundfläche lagert.
- der plattenförmige Träger eine, vorzugsweise zentrale, Bohrung aufweist, durch die sich zumindest eines der folgenden Bauteile erstreckt: Die Eingangswelle des Getriebes zur Veränderung, insbesondere Reduktion, der Drehzahl der unidirektionalen Rotationsbewegung, eine Antriebswelle zur Übertragung einer unidirektionalen Rotationsbewegung, die das Exzentergetriebe antreibende Welle, insbesondere eine Welle, die mit einem Teil des Exzentergetriebes, zum Beispiel einem Extzenterstift, verbunden ist.
- das Exzentergetriebe von einer Welle antreibbar ist, welche das Getriebe zur Veränderung der Drehzahl der unidirektionalen Rotationsbewegung durchsetzt. Vorzugsweise ist die das Exzentergetriebe antreibende Welle mit einem Teil des Exzentergetriebes, zum Beispiel einem Extzenterstift oder einer Aufnahme für einen Exzenterstift, verbunden. Vorzugsweise ist an zumindest einem der folgenden Bauteile des Getriebes zur Veränderung der Drehzahl der unidirektionalen Rotationsbewegung eine Bohrung für die das Exzentergetriebe antreibende Welle vorgesehen: An der Eingangswelle, an der drehfest angeordneten ersten Zahnreihe, an dem plattenförmigen Träger mit der ersten Zahnreihe, an dem mit der Eingangswelle verbundenen Fortsatz, an dem drehbar angeordneten und mit der Ausgangswelle verbundenen zweiten Zahnreihe, an der mit der Werkzeughaltevorrichtung verbundenen Ausgangswelle.
- das Getriebe zur Veränderung der Drehzahl der unidirektionalen Rotationsbewegung und die das Exzentergetriebe antreibende Welle im Wesentlichen konzentrisch angeordnet sind.
- der von der Mittelachse des mit der Eingangswelle verbundenen Fortsatzes und der Rotationsachse der das Exzentergetriebe antreibenden Welle eingeschlossene Winkel in etwa 5° - 15° beträgt.
- der von dem mit der Eingangswelle verbundenen Fortsatz und der das Exzentergetriebe antreibende Welle eingeschlossene Winkel in etwa 5° - 15° beträgt.
- die das Exzentergetriebe antreibende Welle, die vorzugsweise mit einem Teil des Exzentergetriebes versehen ist, drehbar in der Ausgangswelle gelagert ist, vorzugsweise durch ein Gleitlager.
- die Ausgangswelle und / oder der Fortsatz und / oder die Eingangswelle als Hohlwelle ausgebildet ist / sind, in welcher / welchen die das Exzentergetriebe antreibende Welle, die vorzugsweise mit einem Teil des Exzentergetriebes versehen ist, aufgenommen ist.
- die Eingangswelle und / oder der Fortsatz drehfest mit der das Exzentergetriebe antreibenden Welle, die vorzugsweise mit einem Teil des Exzentergetriebes versehen ist, verbunden ist / sind, zum Beispiel durch Verpressen. Damit sind sie in vorteilhafter Weise durch eine gemeinsame Antriebswelle und / oder ein gemeinsames Getriebe in Bewegung versetzbar.
- die Eingangswelle mit dem Fortsatz und die das Exzentergetriebe antreibende Welle, die vorzugsweise mit einem Teil des Exzentergetriebes versehen ist, relativ zueinander drehbar sind und insbesondere mit unterschiedlichen Drehzahlen betreibbar sind.
- die Eingangswelle, die das Exzentergetriebe antreibende Welle, die vorzugsweise mit einem Teil des Exzentergetriebes versehen ist, und vorzugsweise die drehfest angeordnete erste Zahnreihe konzentrisch zueinander angeordnet sind. Alternativ oder zusätzlich sind die das Exzentergetriebe antreibende Welle, die vorzugsweise mit einem Teil des Exzentergetriebes versehen ist, die zweite Zahnreihe und die Ausgangswelle konzentrisch zueinander angeordnet.
- die Behandlungsvorrichtung ein medizinisches, insbesondere dentales oder chirurgisches, Handgriffelement, zum Beispiel ein Handstück oder ein Winkelstück, welche(s) insbesondere für endodontische Behandlungen ausgebildet ist, umfasst.
- die Behandlungsvorrichtung, insbesondere das Winkelstück, ein Griffteil aufweist, das einen kopfnahen Abschnitt und einen gewinkelt oder gebogen zu dem kopfnahen Abschnitt angeordneten rückwärtigen Abschnitt aufweist, wobei das Getriebe zur Veränderung der Drehzahl der unidirektionalen Rotationsbewegung zumindest teilweise im kopfnahen Abschnitt angeordnet ist.
- die Getriebeanordnung ein weiteres mechanisches Getriebe aufweist, welches ausgebildet ist, eine unidirektionale Rotationsbewegung in eine oszillierende Rotationsbewegung zu wandeln, so dass die Werkzeughaltevorrichtung in eine oszillierende Rotationsbewegung versetzbar ist, wobei die oszillierende Rotationsbewegung bevorzugt eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel vorzugsweise unterschiedliche Beträge aufweisen. Die Drehbewegung der im Vorstehenden genannten, vorzugsweise simultanen, Hub- und Drehbewegung, in welche die Werkzeughaltevorrichtung versetzbar ist, umfasst somit insbesondere eine oszillierende Rotationsbewegung. Das Getriebe zur Wandlung der unidirektionalen Rotationsbewegung in eine oszillierende Rotationsbewegung kann vorzugsweise auch zur Reduktion der Drehzahl ausgebildet sein.
- das Getriebe zur Wandlung der unidirektionalen Rotationsbewegung in eine oszillierende Rotationsbewegung zwischen dem, vorzugsweise an der Werkzeughaltevorrichtung vorgesehenen, Exzentergetriebe und dem Getriebe zur Veränderung, insbesondere Reduktion, der Drehzahl der unidirektionalen Rotationsbewegung vorgesehen ist. Vorzugsweise ist das Getriebe zur Veränderung, insbesondere Reduktion, der Drehzahl im rückwärtigen Abschnitt und das Getriebe zur Wandlung der unidirektionalen Rotationsbewegung in eine oszillierende Rotationsbewegung im dazu gewinkelt oder gebogen angeordneten, kopfnahen Abschnitt der Behandlungsvorrichtung, insbesondere des Winkelstücks, vorgesehen.
- das Getriebe zur Wandlung der unidirektionalen Rotationsbewegung in eine oszillierende Rotationsbewegung ein erstes Element zur Umwandlung der von der Antriebswelle übertragenen, unidirektionalen Rotationsbewegung in eine Oszillationsbewegung, insbesondere in eine oszillierende Pendel- oder Schwenkbewegung, und ein zweites Element zur Übertragung der unidirektionalen Rotationsbewegung aufweist.
- eine die Werkzeughaltevorrichtung mit dem Getriebe zur Wandlung der unidirektionalen Rotationsbewegung in eine oszillierende Rotationsbewegung verbindende Abtriebswelle derart mit dem ersten Element und / oder dem zweiten Element verbunden ist, dass die Oszillationsbewegung, insbesondere die oszillierende Pendel- oder Schwenkbewegung, und die unidirektionalen Rotationsbewegung gleichzeitig auf die Abtriebswelle übertragbar sind.
- das Exzentergetriebe von einer Welle, die vorzugsweise mit einem Teil des Exzentergetriebes versehen ist, antreibbar ist, welche sich durch das Getriebe zur Wandlung der unidirektionalen Rotationsbewegung in eine oszillierende Rotationsbewegung und / oder durch die Abtriebswelle erstreckt. Vorzugsweise umfasst das Getriebe zur Wandlung der unidirektionalen Rotationsbewegung in eine oszillierende Rotationsbewegung, insbesondere ein zentrales Zahnrad des Getriebes, ein Bohrung zur Aufnahme der das Exzentergetriebe antreibende Welle.
- die Abtriebswelle, welche die Werkzeughaltevorrichtung mit dem Getriebe zur Wandlung der unidirektionalen Rotationsbewegung in eine oszillierende Rotationsbewegung verbindet, als Hohlwelle ausgebildet ist, in welcher die das Exzentergetriebe antreibende Welle, die vorzugsweise mit einem Teil des Exzentergetriebes versehen ist, aufgenommen ist. Die Abtriebswelle und die das Exzentergetriebe antreibende Welle sind insbesondere mit unterschiedlichen Drehzahlen betreibbar.
- das erste Element zur Umwandlung der von der Antriebswelle übertragenen, unidirektionalen Rotationsbewegung in eine Oszillationsbewegung, insbesondere in eine oszillierende Pendel- oder Schwenkbewegung, ein (weiteres) Exzentergetriebe und das zweite Element zur Übertragung der unidirektionalen Rotationsbewegung mehrere Zahnräder aufweist.

Gemäß einem anderen Ausführungsbeispiel, das nicht Gegenstand der Ansprüche ist, ist eine medizinische, insbesondere dentale oder chirurgische, Behandlungsvorrichtung vorgesehen, die umfasst: Eine Werkzeughaltevorrichtung zum Halten eines medizinischen, insbesondere dentalen oder chirurgischen, Werkzeugs und eine Antriebsvorrichtung für das Werkzeug, die ausgebildet ist, das Werkzeug in eine oszillierende Rotationsbewegung zu versetzen, wobei die oszillierende Rotationsbewegung eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel vorzugsweise unterschiedliche Beträge aufweisen, wobei die Antriebsvorrichtung eine Antriebswellenanordnung, die zur Übertragung einer unidirektionalen Rotationsbewegung ausgebildet ist, aufweist, eine Abtriebswelle, ein durch die Antriebswellenanordnung antreibbares mechanisches Getriebe, welches ausgebildet ist, die von der Antriebswellenanordnung übertragene unidirektionale Rotationsbewegung in eine oszillierende Rotationsbewegung umzuwandeln und auf die Abtriebswelle zu übertragen, und ein mit der Werkzeughaltevorrichtung zusammenwirkendes Exzentergetriebe, so dass die Werkzeughaltevorrichtung in vorteilhafter Weise in eine, vorzugsweise simultane, Hub- und oszillierende Rotationsbewegung versetzbar ist.

Besonders vorteilhafte Ausführungsformen dieser Behandlungsvorrichtung umfassen einzeln oder in Kombination, dass:
- das mit der Werkzeughaltevorrichtung zusammenwirkende Exzentergetriebe von einer Welle, die vorzugsweise mit einem Teil des Exzentergetriebes versehen ist, antreibbar ist, die das mechanische Getriebe zur Umwandlung der unidirektionalen Rotationsbewegung in eine oszillierende Rotationsbewegung, insbesondere das zentrale Zahnrad des mechanischen Getriebes, durchsetzt. Vorzugsweise umfasst das Getriebe zur Wandlung der unidirektionalen Rotationsbewegung in eine oszillierende Rotationsbewegung, insbesondere ein zentrales Zahnrad des Getriebes, eine Bohrung zur Aufnahme der das Exzentergetriebe antreibende Welle.
- die Abtriebswelle, welche die Werkzeughaltevorrichtung mit dem Getriebe zur Wandlung der unidirektionalen Rotationsbewegung in eine oszillierende Rotationsbewegung verbindet, als Hohlwelle ausgebildet ist oder eine Bohrung aufweist, in welcher die das Exzentergetriebe antreibende Welle, die vorzugsweise mit einem Teil des Exzentergetriebes versehen ist, aufgenommen ist. Die Abtriebswelle und die das Exzentergetriebe antreibende Welle sind insbesondere relativ zueinander bewegbar und / oder mit unterschiedlichen Drehzahlen betreibbar.
- die Antriebswelle des mechanischen Getriebes zur Umwandlung der unidirektionalen Rotationsbewegung in eine oszillierende Rotationsbewegung als Hohlwelle ausgebildet ist oder eine Bohrung aufweist, in welcher die das Exzentergetriebe antreibende Welle, die vorzugsweise mit einem Teil des Exzentergetriebes versehen ist, aufgenommen ist.
- die Antriebswelle des mechanischen Getriebes zur Umwandlung der unidirektionalen Rotationsbewegung in eine oszillierende Rotationsbewegung drehfest mit der das Exzentergetriebe antreibenden Welle, die vorzugsweise mit einem Teil des Exzentergetriebes versehen ist, verbunden ist, zum Beispiel durch Verpressen. Damit sind die beiden Wellen in vorteilhafter Weise durch eine gemeinsame Antriebswelle und / oder ein gemeinsames Getriebe in Bewegung versetzbar.
- die Antriebswelle des mechanischen Getriebes zur Umwandlung der unidirektionalen Rotationsbewegung in eine oszillierende Rotationsbewegung und die das Exzentergetriebe antreibende Welle, die vorzugsweise mit einem Teil des Exzentergetriebes versehen ist, relativ zueinander drehbar sind und insbesondere mit unterschiedlichen Drehzahlen betreibbar sind.
- die Behandlungsvorrichtung des Weiteren ein Getriebe zur Übertragung und / oder Veränderung, insbesondere Reduktion, der Drehzahl der unidirektionalen Rotationsbewegung aufweist.
- zumindest eine Teil des Getriebes zur Übertragung und / oder Veränderung, insbesondere Reduktion, der Drehzahl, insbesondere ein Zahnrad des Getriebes, direkt an einer das Exzentergetriebe antreibenden Welle, die vorzugsweise mit einem Teil des Exzentergetriebes versehen ist, und / oder an einer das mechanisches Getriebe zur Umwandlung der unidirektionalen Rotationsbewegung in eine oszillierende Rotationsbewegung antreibende Antriebswellenanordnung angeordnet ist, so dass die das Exzentergetriebe antreibenden Welle und die das mechanisches Getriebe zur Umwandlung der unidirektionalen Rotationsbewegung in eine oszillierende Rotationsbewegung antreibende Antriebswellenanordnung gemeinsam durch das zumindest eine Teil des Getriebes zur Übertragung und / oder Veränderung der Drehzahl antreibbar sind.
- das Getriebe zur Übertragung und / oder Veränderung, insbesondere Reduktion, der Drehzahl umfasst: Eine Eingangswelle mit einer Rotationsachse, eine mit der Werkzeughaltevorrichtung verbundene Ausgangswelle, einen mit der Eingangswelle verbundenen Fortsatz mit einer Mittelachse, wobei die Mittelachse gewinkelt zur Rotationsachse der Eingangswelle angeordnet ist, eine drehfest angeordnete erste Zahnreihe mit mehreren Zähnen, eine drehbar angeordnete und mit der Ausgangswelle verbundene zweite Zahnreihe mit mehreren Zähnen, eine drehbar auf dem mit der Eingangswelle verbundenen Fortsatz angeordnete Hülse, die an ihrem ersten Ende eine dritte Zahnreihe und an ihrem zweiten Ende eine vierte Zahnreihe aufweist, wobei die Hülse derart zwischen der ersten Zahnreihe und der zweiten Zahnreihe angeordnet ist, dass zumindest ein Zahn der dritten Zahnreihe mit zumindest einem Zahn der ersten Zahnreihe und zumindest ein Zahn der vierten Zahnreihe mit zumindest einem Zahn der zweiten Zahnreihe kämmt, um eine Veränderung der Drehzahl der Ausgangswelle relativ zur Eingangswelle zu bewirken.
- auf dem mit der Eingangswelle verbundenen Fortsatz zumindest eine Lagervorrichtung vorgesehen ist, so dass die auf dem Fortsatz angeordnete Hülse relativ zum Fortsatz drehbar ist, wobei ein Ende des Fortsatzes als freies Ende ausgebildet ist, das sich frei und ungelagert über die Lagervorrichtung hinaus in Richtung Werkzeughaltevorrichtung erstreckt.
- der von dem mit der Eingangswelle verbundenen Fortsatz und der Eingangswelle eingeschlossene Winkel in etwa 5° - 15° beträgt.
- bezogen auf die Mittelachse die axiale Länge des mit der Eingangswelle verbundenen Fortsatzes in etwa 3 - 7 mm beträgt.
- die Lagervorrichtung auf dem mit der Eingangswelle verbundenen Fortsatz als Wälzlager, insbesondere als Kugellager, oder als Gleitlager ausgebildet ist.
- die Lagervorrichtung den mit der Eingangswelle verbundenen Fortsatz radial umgibt.
- die Lagervorrichtung zwischen dem mit der Eingangswelle verbundenen Fortsatz und der auf dem Fortsatz angeordnete Hülse angeordnet ist.
- die Behandlungsvorrichtung oder das Getriebe zur Veränderung der Drehzahl der unidirektionalen Rotationsbewegung einen scheiben- oder plattenförmigen Träger mit einer ersten Grundfläche und einer im Wesentlichen parallel zur ersten Grundfläche angeordneten zweiten Grundfläche aufweist, wobei an der ersten Grundfläche die drehfest angeordnete erste Zahnreihe derart vorgesehen ist, dass ihre Zähne in Richtung der zweiten Zahnreihe weisen, und wobei vorzugsweise die zweite Grundfläche als Lagersitz für ein die Eingangswelle lagerndes Lagerelement ausgebildet ist.
- die drehfest angeordnete erste Zahnreihe einteilig mit dem plattenförmigen Träger ausgebildet ist.
- der plattenförmige Träger an einem drehfesten Bauteil der Behandlungsvorrichtung, insbesondere an der Außenhülse der Behandlungsvorrichtung, befestigt ist, vorzugsweise mittels einer Schulter oder einem Rücksprung an einer entsprechenden Schulter oder einem entsprechenden Vorsprung der Behandlungsvorrichtung.
- das Lagerelement direkt an der zweiten Grundfläche lagert.
- der plattenförmige Träger eine, vorzugsweise zentrale, Bohrung aufweist, durch die sich zumindest eines der folgenden Bauteile erstreckt: Die Eingangswelle des Getriebes zur Veränderung, insbesondere Reduktion, der Drehzahl der unidirektionalen Rotationsbewegung, eine Antriebswelle zur Übertragung einer unidirektionalen Rotationsbewegung, die das Exzentergetriebe antreibende Welle, insbesondere eine Welle, die mit einem Teil des Exzentergetriebes, zum Beispiel einem Extzenterstift, verbunden ist.
- das Getriebe zur Wandlung der unidirektionalen Rotationsbewegung in eine oszillierende Rotationsbewegung zwischen dem, vorzugsweise an der Werkzeughaltevorrichtung vorgesehenen, Exzentergetriebe und dem Getriebe zur Übertragung und / oder Veränderung, insbesondere Reduktion, der Drehzahl der unidirektionalen Rotationsbewegung vorgesehen ist.
- die Behandlungsvorrichtung ein medizinisches, insbesondere dentales oder chirurgisches, Handgriffelement, zum Beispiel ein Handstück oder ein Winkelstück, welche(s) insbesondere für endodontische Behandlungen ausgebildet ist, umfasst.
- die Behandlungsvorrichtung, insbesondere das Winkelstück, ein Kopfteil mit der Werkzeughaltevorrichtung und ein Griffteil aufweist, wobei das Griffteil einen kopfnahen Abschnitt und einen gewinkelt oder gebogen zu dem kopfnahen Abschnitt angeordneten rückwärtigen Abschnitt aufweist, wobei das mechanische Getriebe zur Umwandlung der unidirektionalen Rotationsbewegung in eine oszillierende Rotationsbewegung zumindest teilweise im kopfnahen Abschnitt angeordnet ist. Vorzugsweise ist das Getriebe zur Übertragung und / oder Veränderung, insbesondere Reduktion, der Drehzahl der unidirektionalen Rotationsbewegung zumindest teilweise im rückwärtigen Abschnitt angeordnet.
- die Antriebswellenanordnung eine erste Antriebswelle, an der zumindest ein Teil des Getriebes zur Übertragung und / oder Veränderung, insbesondere Reduktion, der Drehzahl der unidirektionalen Rotationsbewegung vorgesehen ist, und eine zweite Antriebswelle, an der das Getriebe zur Wandlung der unidirektionalen Rotationsbewegung in eine oszillierende Rotationsbewegung vorgesehen ist, aufweist, wobei die beiden Antriebswellen durch ein Getriebe miteinander verbunden sind. Vorzugsweise ist das die beiden Antriebswellen verbindende Getriebe als Untersetzungsgetriebe oder als 1:1-Getrieb ausgebildet. Vorzugsweise ist die erste Antriebswelle im Wesentlichen im rückwärtigen Abschnitt und die zweite Antriebswelle im Wesentlichen im kopfnahen Abschnitt vorgesehen.
- die beiden Antriebswellen gewinkelt zueinander angeordnet sind und / oder die das Exzentergetriebe antreibende Welle, die vorzugsweise mit einem Teil des Exzentergetriebes versehen ist, gewinkelt zur ersten Antriebswelle angeordnet ist.
- das mechanische Getriebe zur Umwandlung der unidirektionalen Rotationsbewegung in eine oszillierende Rotationsbewegung ein erstes Element zur Umwandlung der von der Antriebswellenanordnung übertragenen, unidirektionalen Rotationsbewegung in eine Oszillationsbewegung, insbesondere in eine oszillierende Pendel- oder Schwenkbewegung, und ein zweites Element zur Übertragung der unidirektionalen Rotationsbewegung aufweist.
- die Abtriebswelle derart mit dem ersten Element und / oder dem zweiten Element verbunden ist, dass die Oszillationsbewegung, insbesondere die oszillierende Pendel- oder Schwenkbewegung, und die unidirektionalen Rotationsbewegung gleichzeitig auf die Abtriebswelle übertragbar sind.

Gemäß einem weiteren, dritten Ausführungsbeispiel ist eine Antriebsvorrichtung für ein medizinisches, insbesondere dentales oder chirurgisches, Werkzeug vorgesehen, die ausgebildet ist, das Werkzeug in eine oszillierende Rotationsbewegung zu versetzen, wobei die oszillierende Rotationsbewegung eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel vorzugsweise unterschiedliche Beträge aufweisen, und wobei die Antriebsvorrichtung umfasst: Eine Antriebswellenanordnung, die zur Übertragung einer unidirektionalen Rotationsbewegung ausgebildet ist, eine Abtriebswelle und ein durch die Antriebswellenanordnung antreibbares mechanisches Getriebe, welches ausgebildet ist, die von der Antriebswellenanordnung übertragene unidirektionale Rotationsbewegung in eine oszillierende Rotationsbewegung umzuwandeln und auf die Abtriebswelle zu übertragen.

Durch das Vorsehen eines mechanischen Getriebes, das eine unidirektionale Rotationsbewegung in eine oszillierende Rotationsbewegung wandelt, wird die Antriebsvorrichtung unabhängig von einer elektrischen Versorgung, insbesondere unabhängig von einem elektromotorischem Antrieb und / oder einer elektrischen Steuerung und kann somit in vorteilhafter Weise mit beliebigen Behandlungsvorrichtungen, insbesondere auch mit pneumatischen Behandlungsvorrichtungen, verwendet werden.

Besonders vorteilhafte Ausführungsformen dieser Antriebsvorrichtung umfassen einzeln oder in Kombination, dass:
- das mechanische Getriebe ein erstes Element zur Umwandlung der von der Antriebswellenanordnung übertragenen, unidirektionalen Rotationsbewegung in eine Oszillationsbewegung, insbesondere in eine oszillierende Pendel- oder Schwenkbewegung, und ein zweites Element zur Übertragung der unidirektionalen Rotationsbewegung aufweist.
- die Abtriebswelle derart mit dem ersten Element und / oder dem zweiten Element verbunden ist, dass die Oszillationsbewegung, insbesondere die oszillierende Pendel- oder Schwenkbewegung, und die unidirektionalen Rotationsbewegung gleichzeitig auf die Abtriebswelle übertragbar sind.
- das erste Element zur Umwandlung der von der Antriebswellenanordnung übertragenen, unidirektionalen Rotationsbewegung in eine Oszillationsbewegung, insbesondere in eine oszillierende Pendel- oder Schwenkbewegung, ein Exzentergetriebe aufweist.
- zumindest ein Teil des Exzentergetriebes an einem Hohlrad des mechanischen Getriebes vorgesehen ist, wobei das Hohlrad vorzugsweise relativ zur Antriebswellenanordnung drehbar ausgebildet ist.
- das zweite Element zur Übertragung der unidirektionalen Rotationsbewegung mehrere Zahnräder aufweist.
- zumindest eines der Zahnräder, vorzugsweise drehbar, an der Abtriebswelle befestigt ist, wobei insbesondere die von dem ersten Element erzeugte Oszillationsbewegung über dieses zumindest eine mit der Abtriebswelle verbundene Zahnrad auf die Abtriebswelle übertragbar ist.
- zumindest eines der Zahnräder des zweiten Elements zur Übertragung der unidirektionalen Rotationsbewegung in dem Hohlrad des Exzentergetriebes angeordnet ist.
- das Hohlrad eine Innenverzahnung aufweist, welche mit dem zumindest einen, in dem Hohlrad angeordneten Zahnrad kämmt.
- um ein drehfest mit der Antriebswellenanordnung oder mit der Abtriebswelle verbundenes, vorzugsweise zentrales, erstes Zahnrad zumindest ein drehbar mit der Antriebswellenanordnung oder mit der Abtriebswelle verbundenes, vorzugsweise peripheres, zweites Zahnrad rotiert, wobei das zumindest eine zweite Zahnrad mit der Innenverzahnung des Hohlrads kämmt.
- die Antriebswellenanordnung eine erste Antriebswelle und eine zweite Antriebswelle aufweist, wobei die erste Antriebswelle mit dem ersten Element des mechanischen Getriebes zur Umwandlung der von der Antriebswellenanordnung übertragenen, unidirektionalen Rotationsbewegung in eine Oszillationsbewegung, insbesondere in eine oszillierende Pendel- oder Schwenkbewegung, und die zweite Antriebswelle mit dem zweiten Element des mechanischen Getriebes zur Übertragung der unidirektionalen Rotationsbewegung verbunden ist.
- die erste Antriebswelle und die zweite Antriebswelle über ein Verteilergetriebe miteinander verbunden sind, so dass sie durch einen gemeinsamen Motor antreibbar sind.
- eine Drehmomentbegrenzungsvorrichtung vorgesehen ist, vorzugsweise an dem mechanischen Getriebe, zum Beispiel eine Rutschkupplung, zur Begrenzung des auf das Werkzeug übertragbaren Drehmoments.
- die Abtriebswelle direkt und / oder fest mit dem zweiten Element zur Übertragung der unidirektionalen Rotationsbewegung, insbesondere mit zumindest einem der Zahnräder des zweiten Element, verbunden ist.
- die Abtriebswelle direkt und / oder fest mit dem ersten Element zur Umwandlung der von der Antriebswellenanordnung übertragenen, unidirektionalen Rotationsbewegung in eine Oszillationsbewegung, insbesondere in eine oszillierende Pendel- oder Schwenkbewegung, insbesondere mit dem Exzentergetriebe, vorzugsweise mit dem Hohlrad verbunden ist und dass ein Teil des ersten Elements, insbesondere des Exzentergetriebes, zum Beispiel der Exzenter oder die Aufnahme, an einem Träger des zumindest einen peripheren Zahnrads, zum Beispiel an dem Verbindungselement, vorgesehen ist.

Gemäß einem Ausführungsbeispiel ist eine medizinische, insbesondere dentale oder chirurgische, Behandlungsvorrichtung, vorzugsweise ein medizinisches, insbesondere dentales oder chirurgisches, Handgriffelement vorgesehen, welche(s) insbesondere für endodontische Behandlungen ausgebildet ist und welche(s) eine im Vorstehenden beschrieben Antriebsvorrichtung gemäß dem dritten Ausführungsbeispiel aufweist, insbesondere eine Antriebsvorrichtung mit einem durch die Antriebswellenanordnung antreibbaren mechanischen Getriebe, welches ausgebildet ist, die von der Antriebswellenanordnung übertragene unidirektionale Rotationsbewegung in eine oszillierende Rotationsbewegung umzuwandeln und auf die Abtriebswelle zu übertragen. Die Behandlungsvorrichtung oder das Handgriffelement weist vorzugsweise eine das mechanische Getriebe umgebende Hülse mit einem Lager, insbesondere einem Gleit- oder Nadellager, auf, durch welches das mechanische Getriebe, vorzugsweise das Exzentergetriebe des mechanischen Getriebes, insbesondere das Hohlrad des Exzentergetriebes des mechanischen Getriebes, drehbar in der Behandlungsvorrichtung oder dem Handgriffelement gelagert ist.

Gemäß einem weiteren Ausführungsbeispiel ist eine medizinische, insbesondere dentale oder chirurgische, Behandlungsvorrichtung, vorzugsweise ein medizinisches, insbesondere dentales oder chirurgisches, Handgriffelement vorgesehen, welche(s) insbesondere für endodontische Behandlungen ausgebildet ist, und welche(s) umfasst: Eine Antriebswelle, die zur Übertragung einer unidirektionalen Rotationsbewegung ausgebildet ist, eine Werkzeughaltevorrichtung zum Halten eines Werkzeugs und eine die Antriebswelle mit der Werkzeughaltevorrichtung verbindende Getriebeanordnung, die mehrere, vorzugsweise drei, mechanische Getriebe aufweist, und die ausgebildet ist, die von der Antriebswelle übertragene unidirektionale Rotationsbewegung derart zu wandeln, dass die Werkzeughaltevorrichtung in eine, vorzugsweise simultane, Hub- und oszillierende Rotationsbewegung mit in Bezug auf die Drehzahl der von der Antriebswelle übertragenen, unidirektionalen Rotationsbewegung reduzierter Drehzahl versetzbar ist. Die oszillierende Rotationsbewegung umfasst bevorzugt eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel, wobei der erste und der zweite Drehwinkel vorzugsweise unterschiedliche Beträge aufweisen. Vorzugsweise umfasst die Getriebeanordnung ein Getriebe zur Reduktion der Drehzahl der unidirektionalen Rotationsbewegung, ein Exzentergetriebe und ein Getriebe, welches ausgebildet ist, die von der Antriebswelle übertragene unidirektionale Rotationsbewegung in eine oszillierende Rotationsbewegung umzuwandeln. Bevorzugt weisen diese drei genannten Getriebe ein oder mehrere der im Vorstehenden genannten Ausführungsformen auf.

Ein bevorzugtes Ausführungsbeispiel einer Verwendung einer der im Vorstehenden beschriebenen medizinischen, insbesondere dentalen oder chirurgischen, Behandlungsvorrichtungen oder Handgriffelemente umfasst eine endodontische Behandlung.

Im Folgenden werden bevorzugte Ausführungsbeispiele unter Bezugnahme auf die beigefügten Zeichnungen erläutert:
Die Figuren 1 - 4 zeigen ein erstes Ausführungsbeispiel einer Antriebsvorrichtung mit einem mechanischen Getriebe, das eine unidirektionale Rotationsbewegung in eine oszillierende Rotationsbewegung wandelt.
Die Figuren 5 - 7 zeigen ein zweites Ausführungsbeispiel einer Antriebsvorrichtung mit einem mechanischen Getriebe, das eine unidirektionale Rotationsbewegung in eine oszillierende Rotationsbewegung wandelt.
Die Figuren 8A, 8B und 9A, 9B zeigen jeweils in Vorder- und Rückansicht zwei unterschiedliche Ausführungsbeispiele von innenverzahnten Hohlrädern, welche Teil des Exzentergetriebes des mechanischen Getriebes der Antriebsvorrichtung sind.
Figur 10 zeigt ein Ausführungsbeispiel einer oszillierenden Rotationsbewegung, wie sie durch eine Antriebsvorrichtung mit einem mechanischen Getriebe, das eine unidirektionale Rotationsbewegung in eine oszillierende Rotationsbewegung wandelt, erzeugbar ist.
Figur 11 zeigt eine medizinische, insbesondere dentale oder chirurgische, Behandlungsvorrichtung mit einem medizinischen, insbesondere dentalen, Handgriffelement, in welchem eine Antriebsvorrichtung mit einem mechanischen Getriebe, das eine unidirektionale Rotationsbewegung in eine oszillierende Rotationsbewegung wandelt, vorgesehen ist.
Figur 12 zeigt eine medizinische, insbesondere dentale oder chirurgische, Behandlungsvorrichtung, die nicht Gegenstand der Ansprüche ist, mit einer Getriebeanordnung, die ein Getriebe zur Veränderung, insbesondere Reduktion, der Drehzahl und ein Exzentergetriebe aufweist, so dass die Werkzeughaltevorrichtung der Behandlungsvorrichtung in eine, vorzugsweise simultane, Hub- und Drehbewegung mit veränderter Drehzahl versetzbar ist.
Figur 13 zeigt die Getriebeanordnung der Figur 12, die nicht Gegenstand der Ansprüche ist, in einer vergrößerten Darstellung.
Figur 14 zeigt eine medizinische, insbesondere dentale oder chirurgische, Behandlungsvorrichtung mit einer Getriebeanordnung, die ein Getriebe zur Veränderung, insbesondere Reduktion, der Drehzahl, ein Exzentergetriebe und ein Getriebe, welches ausgebildet ist, die von der Antriebswelle übertragene unidirektionale Rotationsbewegung in eine oszillierende Rotationsbewegung umzuwandeln, aufweist, so dass die Werkzeughaltevorrichtung der Behandlungsvorrichtung in eine, vorzugsweise simultane, Hub- und oszillierende Rotationsbewegung mit veränderter Drehzahl versetzbar ist.

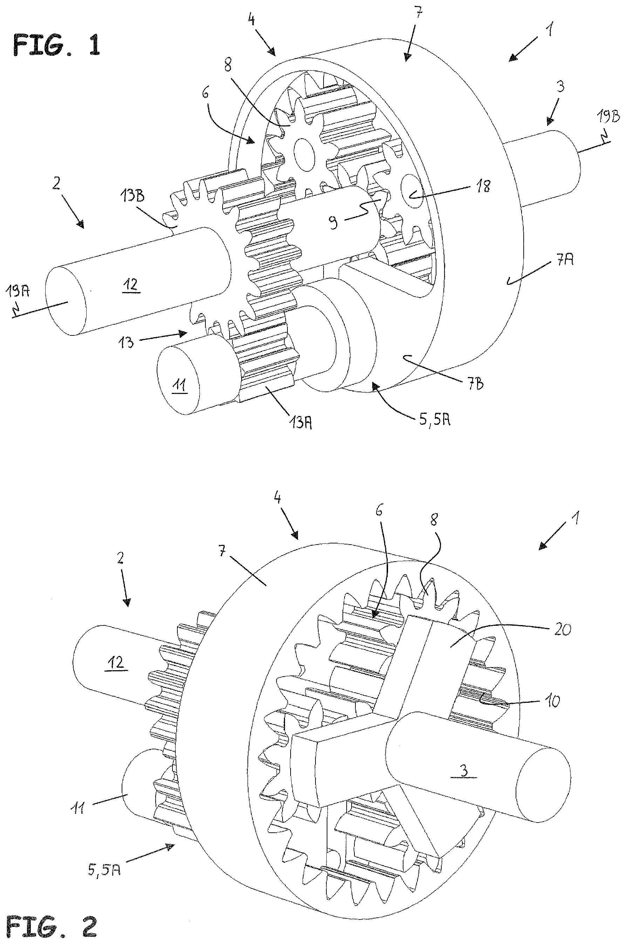

Die Figuren 1 - 4 und 5 - 7 zeigen unterschiedliche Ausführungsbeispiele von Antriebsvorrichtungen 1, 1A für ein medizinisches, insbesondere dentales oder chirurgisches, vorzugsweise endodontisches, Werkzeug. Im Folgenden werden die gemeinsamen Bauteile und / oder Funktionen der beiden Antriebsvorrichtungen 1, 1A beschrieben:

Die Antriebsvorrichtungen 1, 1A weisen jeweils ein mechanisches Getriebe 4 auf, das ausgebildet ist, eine unidirektionale Rotationsbewegung in eine oszillierende Rotationsbewegung umzuwandeln. Als oszillierende Rotationsbewegung wird eine Rotationsbewegung bezeichnet, die abwechselnd eine Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel vorzugsweise unterschiedliche Beträge aufweisen. In anderen Worten umfasst eine oszillierende Rotationsbewegung einen Bewegungsverlauf, bei dem zum Beispiel ein mit dem mechanischen Getriebe 4 verbundenes Wellenelement oder Werkzeug abwechselnd mit einem ersten Drehwinkel im oder gegen den Uhrzeigersinn und mit einem zweiten Drehwinkel im oder gegen den Uhrzeigersinn rotiert wird, wobei die Drehwinkel vorzugsweise unterschiedliche Beträge aufweisen. In Summe ergibt dieser Bewegungsverlauf aufgrund der unterschiedlichen Beträge der Drehwinkel eine Rotationsbewegung des Wellenelements oder Werkzeugs in eine Vorzugs- oder Arbeitsrichtung, wobei das Wellenelement oder Werkzeug aufgrund der unterschiedlichen Drehrichtungen jedoch eine oszillierende Bewegung durchläuft. Die oszillierende Rotationsbewegung ermöglicht somit ein abwechselndes Abtragen von Gewebe an einem Präparationsbereich, insbesondere aus dem Zahnwurzelkanal, und ein Fördern des abgetragenen Gewebes weg von dem Präparationsbereich, zum Beispiel in Richtung der Zahnkrone oder des mechanischen Getriebes 4.

Die Antriebsvorrichtungen 1, 1A weisen neben dem Getriebe 4 eine Antriebswellenanordnung 2 und eine Abtriebswelle 3 auf, die beide operativ, insbesondere mechanisch, mit dem Getriebe 4 verbunden sind. Die Antriebswellenanordnung 2 ist mit einem motorischen Antrieb verbunden oder verbindbar, zum Beispiel mit einem pneumatisch betreibbaren Motor oder einem elektrisch betreibbaren Motor. Der motorische Antrieb generiert eine unidirektionale Rotationsbewegung im Uhrzeigersinn oder gegen den Uhrzeigersinn, welche von der Antriebswellenanordnung 2 auf das Getriebe 4 übertragen oder dem Getriebe 4 zur Verfügung gestellt wird. Aus den Figuren 1 - 7 ist zu erkennen, dass die Antriebswellenanordnung 2 vorzugsweise zumindest zwei Antriebswellen 11, 12 aufweist, auf deren Funktion im Weiteren noch eingegangen wird.

Die Abtriebswelle 3 überträgt die von dem Getriebe 4 erzeugte oszillierende Rotationsbewegung auf das Werkzeug und / oder auf eine Werkzeughaltevorrichtung.

Das mechanische Getriebe 4 weist ein erstes Element 5 zur Umwandlung der von der Antriebswellenanordnung 2 übertragenen, unidirektionalen Rotationsbewegung in eine Oszillationsbewegung, insbesondere in eine oszillierende Pendel- oder Schwenkbewegung, und ein zweites Element 6 zur Übertragung der unidirektionalen Rotationsbewegung auf. Insbesondere ist die Abtriebswelle 3 derart mit dem ersten Element 5 und / oder dem zweiten Element 6 verbunden, dass die Oszillationsbewegung und die unidirektionalen Rotationsbewegung gleichzeitig auf die Abtriebswelle 3 übertragbar sind.

Vorzugsweise weist das erste Element 5 zur Umwandlung der von der Antriebswellenanordnung 2 übertragenen, unidirektionalen Rotationsbewegung in eine Oszillationsbewegung, insbesondere in eine oszillierende Pendel- oder Schwenkbewegung, ein Exzentergetriebe 5A auf. Das Exzentergetriebe 5A umfasst einen Exzenter 88, zum Beispiel einen Exzenterstift oder eine Exzenterscheibe, sowie eine Aufnahme 17 für den Exzenter 88. Die Aufnahme 17 kann zum Beispiel als Nut, Schlitz, Rille, Rücksprung oder Führung für den Exzenter 88 ausgebildet sein. Der Exzenter 88 ist insbesondere außermittig zu einer Drehachse der Antriebswellenanordnung 2, insbesondere zur Drehachse der ersten Antriebswelle 11, angeordnet. Der Exzenter 88, insbesondere ein stiftförmiger Exzenter 88, kann vorzugsweise mit einem Lager, zum Beispiel einem Wälz-, Nadel- oder Gleitlager, versehen sein.

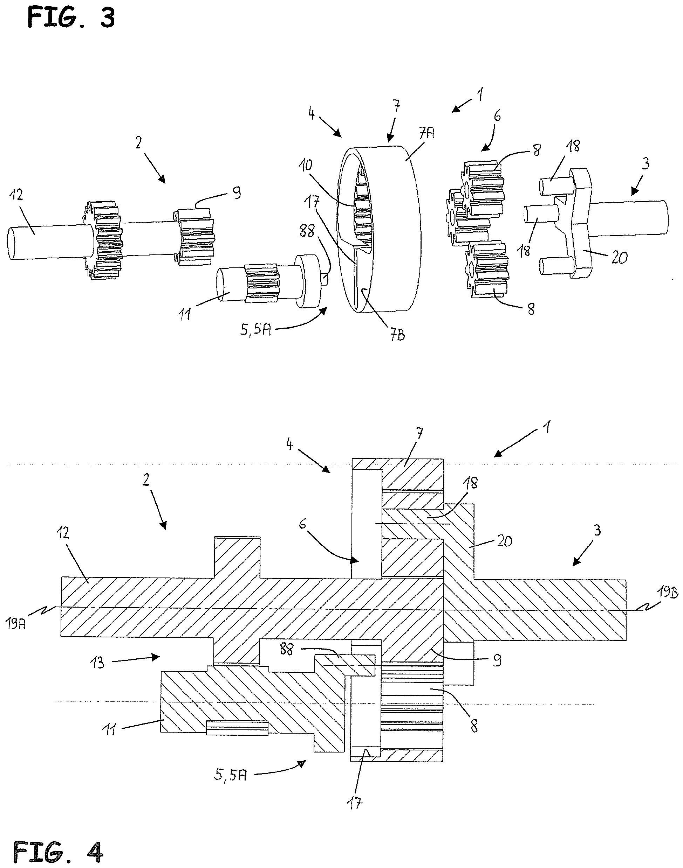

Ein erstes Teil des Exzentergetriebes 5A ist an der Antriebswellenanordnung 2, insbesondere an deren erster Antriebswelle 11, vorgesehen, vorzugsweise der Exzenter 88 (siehe zum Beispiel Figur 3), es ist jedoch genau so möglich, die Aufnahme 17 für den Exzenter 88 an der Antriebswellenanordnung 2 anzuordnen. Ein weiteres Teil des Exzentergetriebes 5A, zum Beispiel die Aufnahme 17 oder der Exzenter 88, ist am Getriebe 4 selbst vorgesehen, insbesondere an einem Hohlrad 7 des mechanischen Getriebes 4 (siehe ebenfalls Figur 3). Vorzugsweise ist dazu am Hohlrad 7 ein sich von einem Mantel 7A des Hohlrads 7 erstreckender Wandabschnitt 7B oder Träger für ein Exzenterteil vorgesehen, an dem sich das weitere Teil des Exzentergetriebes 5A befindet. Der Wandabschnitt 7B oder Träger erstreckt sich insbesondere radial von einer Endkante oder Stirnfläche des Mantels 7A, insbesondere in die von dem Mantel 7A begrenzte lichte Weite des Hohlrads 7. Angrenzend an den Wandabschnitt 7B oder Träger ist die Antriebswelle 11 angeordnet.

Vorzugsweise ist das Hohlrad 7 relativ zur Antriebswellenanordnung 2, insbesondere zu ersten Antriebswelle 11, drehbar, zum Beispiel verschwenkbar, ausgebildet. Vorzugsweise weist das Hohlrad 7 an seiner Innenseite, insbesondere an der Innenseite des Mantels 7A, eine Innenverzahnung 10 auf, auf deren Funktion im Weiteren noch eingegangen wird.

Vorzugsweise weist das zweite Element 6 zur Übertragung der unidirektionalen Rotationsbewegung mehrere Zahnräder 8, 8A, 9, 9A auf. Insbesondere ist zumindest ein Teil des zweiten Elements 6 zur Übertragung der unidirektionalen Rotationsbewegung oder zumindest ein Zahnrad 8, 8A, 9, 9A von dem Hohlrad 7 umgeben oder im Hohlrad 7 angeordnet. Die Zahnräder 8, 8A, 9, 9A sind mit der Antriebswellenanordnung 2, insbesondere mit deren zweiten Antriebswelle 12, verbunden, so dass die Antriebswellenanordnung 2 die unidirektionalen Rotationsbewegung auf die Zahnräder 8, 8A, 9, 9A überträgt und diese in Rotation versetzt. Vorzugsweise ist zumindest eines der Zahnräder 8, 8A, 9, 9A drehfest mit der Antriebswellenanordnung 2, insbesondere mit deren zweiten Antriebswelle 12 zur Übertragung der unidirektionalen Rotationsbewegung, verbunden.

Aus den Figuren 1 - 7 ist des Weiteren zu erkennen, dass zumindest eines, vorzugsweise mehrere, der Zahnräder 8, 8A, 9, 9A mit der Innenverzahnung 10 des Hohlrads 7 kämmt / kämmen, so dass Drehbewegungen und Drehmomente zwischen dem Hohlrad und zumindest einigen der Zahnräder 8, 8A, 9, 9A übertragbar sind.

Vorzugsweise umfassen die Zahnräder 8, 8A, 9, 9A ein zentrales Zahnrad 9, 9A, um das ein oder mehrere, zum Beispiel zwei oder drei, periphere Zahnräder 8, 8A angeordnet sind. Das zentrale Zahnrad 9, 9A steht mit dem zumindest einen peripheren Zahnrad 8, 8A in Eingriff, so dass Drehbewegungen und Drehmomente zwischen dem zentralen Zahnrad 9, 9A und dem zumindest einen peripheren Zahnrad 8, 8A übertragbar sind. Vorzugsweise kämmt das zumindest eine periphere Zahnrad 8, 8A mit der Innenverzahnung 10 des Hohlrads 7. Vorzugsweise ist das zumindest eine periphere Zahnrad 8, 8A drehbar auf Wellen- oder Schaftabschnitten 18 angeordnet.

Wie im Vorstehenden bereits beschrieben, weist die Antriebswellenanordnung 2 eine erste Antriebswelle 11 und eine zweite Antriebswelle 12 auf, wobei die erste Antriebswelle 11 mit dem ersten Element 5 des mechanischen Getriebes 4 zur Umwandlung der von der Antriebswellenanordnung 2 übertragenen, unidirektionalen Rotationsbewegung in eine Oszillationsbewegung, insbesondere in eine oszillierende Pendel- oder Schwenkbewegung, und die zweite Antriebswelle 12 mit dem zweiten Element 6 des mechanischen Getriebes 4 zur Übertragung der unidirektionalen Rotationsbewegung verbunden ist. Damit die beiden Antriebswellen 11, 12 durch einen gemeinsamen Motor antreibbar sind, ist ein Verteilergetriebe 13 vorgesehen, das die beiden Antriebswellen 11, 12 miteinander verbindet. Das Verteilergetriebe 13 ist zum Beispiel durch zwei, miteinander in Eingriff stehende Zahnräder 13A, 13B gebildet, wobei je ein Zahnrad 13A, 13B auf einer Antriebswelle 11, 12 befestigt ist. Die beiden Zahnräder 13A, 13B können vorzugsweise eine unterschiedliche Anzahl von Zähnen aufweisen, um ein Unter- oder Übersetzungsgetriebe zu bilden, so dass die beiden Antriebswellen 11, 12 mit unterschiedlichen Drehzahlen und / oder Drehmomenten rotieren. Vorzugsweise ist die erste, mit dem ersten Element 5 des mechanischen Getriebes 4 zur Umwandlung der von der Antriebswellenanordnung 2 übertragenen, unidirektionalen Rotationsbewegung in eine Oszillationsbewegung verbundene Antriebswelle 11 über das Verteilergetriebe 13 mit dem gemeinsamen Motor verbunden. Vorzugsweise überträgt die zweite, mit dem zweiten Element 6 des mechanischen Getriebes 4 zur Übertragung der unidirektionalen Rotationsbewegung verbundene Antriebswelle 12 die Rotationsbewegung des gemeinsamen Motors über das Verteilergetriebe 13 auf die erste Antriebswelle 11.

Vorzugsweise bildet eine Drehachse 19A der Antriebswellenanordnung 2, insbesondere eine Drehachse 19A einer der Antriebswellen 11, 12, und / oder eine Drehachse 19B der Abtriebswelle 3 eine Mittel- und / oder Drehachse für zumindest Teile des mechanischen Getriebes 4, insbesondere für eines der Zahnräder 8, 8A, 9, 9A, insbesondere für das zentrale Zahnrad 9, 9A, und / oder für das Hohlrad 7.

Gemäß einem Ausführungsbeispiel ist es auch möglich, mehrere erste Antriebswellen 11 vorzusehen, wobei jede der ersten Antriebswellen 11 mit dem ersten Element 5 des mechanischen Getriebes 4 zur Umwandlung der von der Antriebswellenanordnung 2 übertragenen, unidirektionalen Rotationsbewegung in eine Oszillationsbewegung, insbesondere in eine oszillierende Pendel- oder Schwenkbewegung, verbunden ist.

Im Folgenden wird unter Bezugnahme auf die Figuren 1 - 4 die Funktionsweise der Antriebsvorrichtung 1 beschrieben:

Nach der Aktivierung eines mit der Antriebswellenanordnung 2 verbundenen oder verbindbaren motorischen Antriebs erzeugt dieser eine unidirektionale Rotationsbewegung, welche auf die Antriebswellenanordnung 2, insbesondere auf eine der beiden Antriebswellen 11, 12 und über das Verteilergetriebe 13 auf die andere der beiden Antriebswellen 11, 12, übertragen wird, so dass beide Antriebswellen 11, 12 eine unidirektionale, insbesondere gegensinnige, Rotationsbewegung ausführen.

Das drehfest mit der zweiten Antriebswelle 12 verbundene, zentrale Zahnrad 9 wird somit ebenfalls in Rotation versetzt und treibt aufgrund des kämmenden Eingriffs die, gemäß den Figuren 1 - 4 drei, peripheren Zahnräder 8 an. Die Drehrichtung der durch das zentrale Zahnrad 9 in Drehung versetzten peripheren Zahnräder 8 ist dabei entgegengesetzt der Drehrichtung des zentralen Zahnrads 9 und der zweiten Antriebswelle 12. Die drehbar auf den Wellen- oder Schaftabschnitten 18 angeordneten peripheren Zahnräder 8 bewegen sich aufgrund ihres kämmenden Eingriffs mit der Innenverzahnung 10 des Hohlrads 7 entlang der Innenwand des Hohlrads 7. Die peripheren Zahnräder 8 durchlaufen somit eine Drehbewegung innerhalb des Hohlrads 7 oder entlang dessen Innenwand. Über eine Verbindung jedes peripheren Zahnrads 8 oder jedes Wellen- oder Schaftabschnitten 18 mittels eines Verbindungselements 20, zum Beispiel eines Arms oder eines Stegs, mit der Abtriebswelle 3 wird die Rotationsbewegung der peripheren Zahnräder 8 auf die Abtriebswelle 3 übertragen. Die Zahnräder 8, 9 sind somit Teil des zweiten Elements 6 zur Übertragung der unidirektionalen Rotationsbewegung von der Antriebswellenanordnung 2 auf die Abtriebswelle 3. Die Drehrichtungen der Antriebswellenanordnung 2 und der Abtriebswelle 3 sind hierbei gleich gerichtet. Durch eine entsprechende Wahl der Verzahnung der Zahnräder 8, 9 ist es des Weiteren vorzugsweise möglich, das zweite Element 6 des Getriebes 4 als Über- oder Untersetzungsgetriebe oder als 1:1 Getriebe ohne Über- oder Untersetzung auszubilden.

Die ebenfalls unidirektional rotierende erste Antriebswelle 11 treibt gleichzeitig, d.h. während die unidirektionale Rotationsbewegung durch das zweite Element 6 auf die Abtriebswelle 3 übertragen wird, das erste Element 5, d.h. das Exzentergetriebe 5A, des Getriebes 4 an. Aufgrund des Eingriffs des Exzenters 88 in die Aufnahme 17 des Hohlrads 7 und aufgrund der Rotationsbewegung der Antriebswelle 11 und damit des außermittig angeordneten Exzenters 88 wird das Hohlrad 7 in eine Oszillationsbewegung, insbesondere in eine oszillierende Pendel- oder Schwenkbewegung, um die Drehachse 19A, 19B versetzt. Das Hohlrad 7, das in Bezug auf die Antriebswellenanordnung 2 oder die Wellen 3, 11, 12 drehbar ausgebildet ist, rotiert oder oszilliert somit abwechselnd um einen Drehwinkel im Uhrzeigersinn und gegen den Uhrzeigersinn.

Da, wie im Vorstehenden bereits erwähnt, die Übertragung der unidirektionalen Drehbewegung durch das zweite Element 6 des mechanischen Getriebes 4 und die durch das erste Element 5 des Getriebes 4 bewirkte Oszillationsbewegung des Hohlrads 7, in welchem sich die peripheren Zahnräder 9 relativ zum Hohlrad 7 bewegen, gleichzeitig ablaufen, kommt es zu einer Überlagerung der unidirektionalen Rotationsbewegung und der Oszillationsbewegung. Insbesondere ist zumindest eines der Zahnräder 8, 8A, 9, 9A drehbar mit der Abtriebswelle 3 verbunden, wobei die von dem ersten Element 5, insbesondere dem Hohlrad 7, erzeugte Oszillationsbewegung über dieses zumindest eine drehbar mit der Abtriebswelle 3 verbundene Zahnrad 8, 8A, 9, 9A auf die Abtriebswelle 3 übertragbar ist. Besonders bevorzugt ist zumindest eines der Zahnräder 8, 8A, 9, 9A, vorzugsweise drehbar, an der Abtriebswelle 3 befestigt, wobei vorzugsweise die von dem ersten Element 5 erzeugte Oszillationsbewegung über dieses zumindest eine mit der Abtriebswelle 3 verbundene Zahnrad 8, 8A, 9, 9A auf die Abtriebswelle 3 übertragbar ist.

Vorzugsweise bewirkt eine mit der Rotationsbewegung der peripheren Zahnräder 8 gleichsinnige Bewegung des Hohlrads 7 eine Rotation der Abtriebswelle 3 oder eines mit der Abtriebswelle 3 verbindbaren oder verbundenen Werkzeugs in eine erste Richtung, insbesondere in eine im Vorstehenden bereits erwähnte Vorzugs- oder Arbeitsrichtung, und / oder bewirkt eine Bewegung um einen ersten, großen Drehwinkel der Abtriebswelle 3 oder des Werkzeugs. Entsprechend bewirkt eine der Rotationsbewegung der peripheren Zahnräder 8 entgegengesetzte Bewegung des Hohlrads 7 eine Rotation der Abtriebswelle 3 oder eines mit der Abtriebswelle 3 verbindbaren oder verbundenen Werkzeugs in eine zweite, entgegengesetzte Richtung, insbesondere entgegen der Vorzugs- oder Arbeitsrichtung oder in eine Rückstellrichtung, und / oder bewirkt eine Bewegung um einen zweiten, kleinen Drehwinkel der Abtriebswelle 3 oder des Werkzeugs.

Vorzugsweise ist die Winkelgeschwindigkeit des Hohlrads 7 während der Oszillationsbewegung aufgrund der unterschiedlichen Entfernung des Exzenters 88 von der Drehachse 19A unterschiedlich: Vorzugsweise ist das Exzentergetriebe 5A derart ausgebildet, dass während der Bewegung der Abtriebswelle 3 oder des Werkzeugs in die oben genannte zweite Richtung, insbesondere entgegen der Vorzugs- oder Arbeitsrichtung oder in eine Rückstellrichtung, die Winkelgeschwindigkeit des Hohlrads 7 größer ist als während der Bewegung der Abtriebswelle 3 oder des Werkzeugs in die erste Richtung, insbesondere in die Vorzugs- oder Arbeitsrichtung. Bevorzugt bleibt der Drehwinkel des Hohlrads 7 während der Oszillationsbewegung im Wesentlichen konstant.

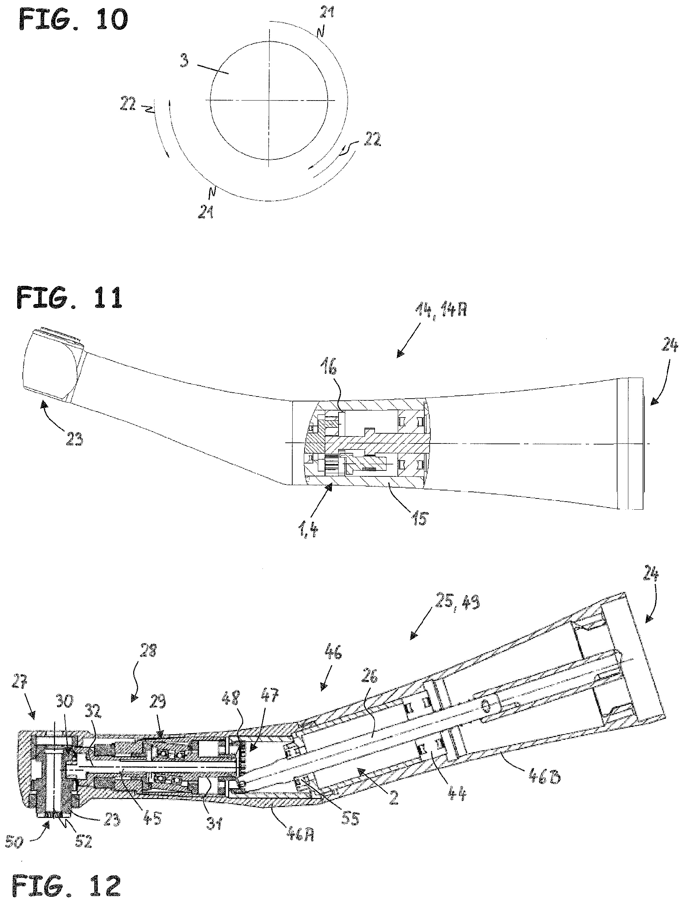

Die aus der Überlagerung der unidirektionalen Rotationsbewegung und Oszillationsbewegung resultierende oszillierende Rotationsbewegung der Abtriebswelle 3 oder eines damit verbundenen Werkzeugs ist in der Figur 10 dargestellt: Die Abtriebswelle 3 oder das Werkzeug rotieren abwechselnd in eine erste Drehrichtung 21 (im Vorstehenden auch als Vorzugs- oder Arbeitsrichtung bezeichnet, in welcher Material abgetragen wird) um einen ersten Drehwinkel und in eine zweite Drehrichtung 22 (entgegen der Vorzugs- oder Arbeitsrichtung oder im Vorstehenden auch als Rückstellrichtung benannt, in welcher abgetragenes Material weggefördert wird), welche der ersten Drehrichtung 21 im Wesentlichen entgegengesetzt ist, um einen zweiten Drehwinkel, wobei der erste und der zweite Drehwinkel vorzugsweise unterschiedliche Beträge aufweisen. Gemäß dem dargestellten Ausführungsbeispiel beträgt zum Beispiel der Drehwinkel der ersten Drehrichtung 21 in etwa 150° und der Drehwinkel der zweiten Drehrichtung 22 in etwa 30°. Klarerweise sind beliebige andere Werte für die Drehwinkel möglich, solange die Drehwinkel unterschiedliche Beträge aufweisen, zum Beispiel in etwa 45° und 20°, 180° und 90°, 270° und 90°, 450° und 180°, etc. Auch sind die in der Figur 10 dargestellten Drehrichtung nur beispielhaft, es ist daher genau so möglich, die in der Figur 10 dargestellten Drehrichtungen der beiden Drehbewegungen 21, 22 umzukehren, d.h. die Drehrichtung 21 würde dann entgegen dem Uhrzeigersinn und die Drehrichtung 22 im Uhrzeigersinn verlaufen.

Die Frequenz der Oszillationsbewegung der Abtriebswelle 3 oder des Werkzeugs liegt zum Beispiel im Bereich von etwa 3 - 50 Hertz, insbesondere im Bereich von etwa 5 - 20 Hertz, insbesondere bei etwa 10 Hertz.

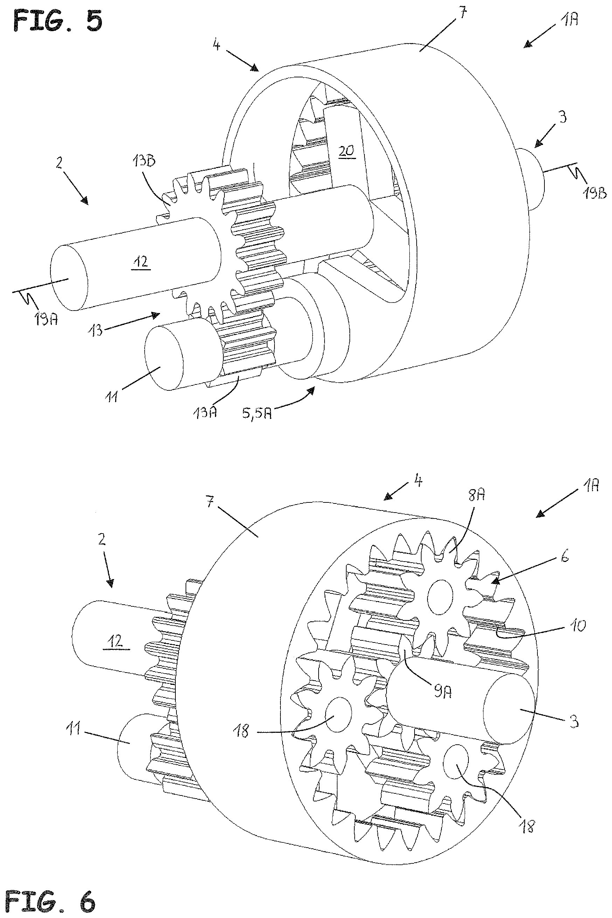

Die Funktionsweise der Antriebsvorrichtung 1A der Figuren 5 - 7 gleicht der im Vorstehenden beschriebenen Funktionsweise der Antriebsvorrichtung 1. Der Aufbau der Antriebsvorrichtung 1A ist jedoch insofern anders, als dass die zweite Antriebswelle 12 über die Verbindungselemente 20 mit den, vorzugsweise drei, peripheren Zahnrädern 8A und die Abtriebswelle 3 drehfest mit dem zentralen Zahnrad 9A verbunden ist. Die peripheren Zahnrädern 8A sind wiederum drehbar relativ zur zweiten Antriebswelle 12 angeordnet, insbesondere drehbar auf den an den Verbindungselementen 20 befestigten Wellen- oder Schaftabschnitten 18.

Gemäß einem Ausführungsbeispiel ist an der Antriebsvorrichtung 1, 1A, insbesondere an dem mechanischen Getriebe 4 eine Drehmomentbegrenzungsvorrichtung zur Begrenzung des auf das Werkzeug übertragbaren Drehmoments vorgesehen, zum Beispiel eine Rutschkupplung. Die Drehmomentbegrenzungsvorrichtung kann zum Beispiel antriebsseitig, insbesondere an der Antriebswellenanordnung 2 oder an zumindest einer Antriebswelle 11, 12, oder abtriebsseitig, insbesondere an der Abtriebswelle 3 angeordnet sein.

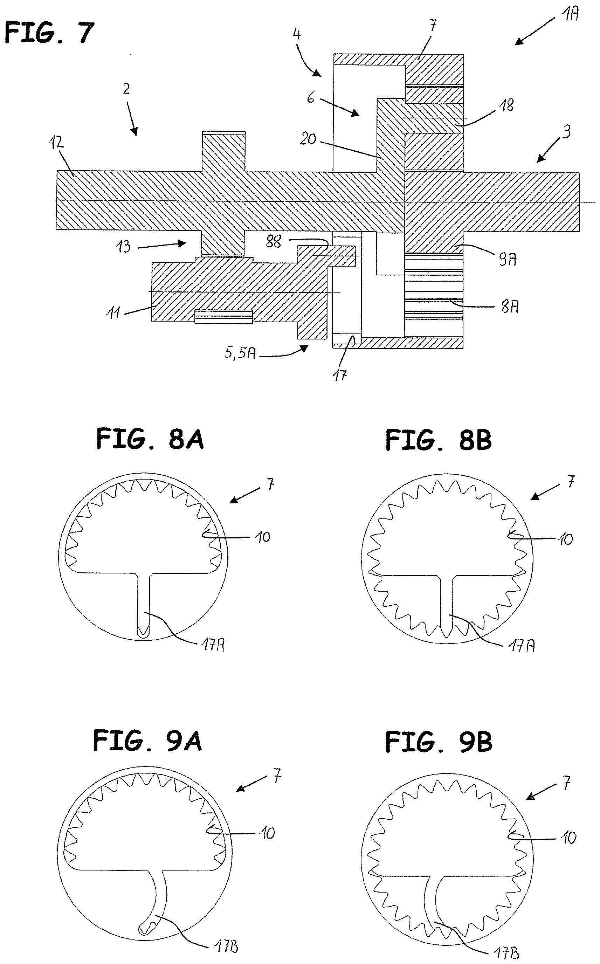

Die Figuren 8A, 8B und 9A, 9B zeigen jeweils Vorder- und Rückansicht von Ausführungsformen des Hohlrads 7 mit unterschiedlichen, insbesondere nut- oder schlitzförmigen, Aufnahmen 17A, 17B für den Exzenter 88. Die Aufnahmen 17, 17A, 17B können zum Beispiel gerade, gebogen, im Wesentlichen S-förmig, schräg, mittig oder außermittig ausgebildet oder angeordnet sein. Durch die Variation der Form und / oder Orientierung der Aufnahmen 17, 17A, 17B des Exzentergetriebes 5A sind zum Beispiel der Drehwinkel oder die Drehgeschwindigkeit des Hohlrads 7, der Abtriebswelle 3 oder eines damit verbundenen Werkzeugs variierbar.

Die Figur 11 zeigt eine medizinische, insbesondere dentale oder chirurgische, Behandlungsvorrichtung 14, vorzugsweise ein medizinisches, insbesondere dentales oder chirurgisches, Handgriffelement 14A, welche(s) insbesondere für endodontische Behandlungen ausgebildet ist, mit einer Antriebsvorrichtung 1, 1A, die ausgebildet ist, das Werkzeug in eine oszillierende Rotationsbewegung zu versetzen. Bevorzugt ist das mechanische Getriebe 4 der Antriebsvorrichtung 1, 1A von einer Hülse 15 mit einem Lager 16, insbesondere einem Gleit- oder Nadellager umgeben, wobei an der Hülse 15, insbesondere an dem Lager 16, das mechanische Getriebe 4, bevorzugt das Exzentergetriebe 5A des mechanischen Getriebes 4, besonders bevorzugt das Hohlrad 7 des Exzentergetriebes 5A des mechanischen Getriebes 4 drehbar gelagert ist. Vorzugsweise bildet die Hülse 15 zumindest einen Teil des Lagers 16, insbesondere des Gleitlagers. Die Hülse 15 ist zum Beispiel durch eine Griff- oder Außenhülse der Behandlungsvorrichtung 14 oder des Handgriffelements 14A gebildet. Bevorzugt ist das Getriebe 4, vorzugsweise das Exzentergetriebe 5A, insbesondere das Hohlrad 7 des Exzentergetriebes 5A durch das Lager 16 drehbar in der Behandlungsvorrichtung 14 oder dem Handgriffelement 14A gelagert.

Die Behandlungsvorrichtung 14 oder das Handgriffelement 14A weist des Weiteren eines oder mehrere der folgenden Bauteile auf: Eine Werkzeughaltevorrichtung 23 zum lösbaren Halten eines mit der Behandlungsvorrichtung 14 oder dem Handgriffelement 14A verbindbaren Werkzeugs, wobei die Werkzeughaltevorrichtung 23 mit der Abtriebswelle 3 der Antriebsvorrichtung 1, 1A verbunden ist, so dass die oszillierende Rotationsbewegung auf die Werkzeughaltevorrichtung 23 übertragbar ist; einen motorischen Antrieb, insbesondere einen Elektromotor oder einen pneumatisch betreibbaren Motor; eine Kupplungsvorrichtung 24 zur Verbindung der Behandlungsvorrichtung 14 oder des Handgriffelements 14A mit einem motorischen Antrieb, insbesondere einem Elektromotor oder einem pneumatisch betreibbaren Motor, und / oder mit einer Steuer- und / oder Regelvorrichtung und / oder mit zumindest einer Medienquelle, insbesondere eine Druckluft- oder Wasserquelle; eine Lichtquelle, insbesondere mit einem Licht abstrahlenden, optischen Halbleiterelement, zur Beleuchtung der Präparationsstelle und / oder des Werkzeugs; zumindest eine Medienleitung zur Förderung eines Mediums in Richtung der Werkzeughaltevorrichtung 23 und / oder an die Präparationsstelle; ein Speicherelement zur, vorzugsweise überschreibbaren, Speicherung von Identifikationsdaten der Behandlungsvorrichtung 14 oder des Handgriffelements 14A und / oder von Betriebsdaten der Behandlungsvorrichtung 14 oder des Handgriffelements 14A und / oder von Vorgabewerten; eine Temperaturmessvorrichtung, insbesondere im Bereich der Werkzeughaltevorrichtung 23; eine Anzeigevorrichtung zum Anzeigen von Betriebsdaten der Behandlungsvorrichtung 14 oder des Handgriffelements 14A und / oder von Warnhinweisen.

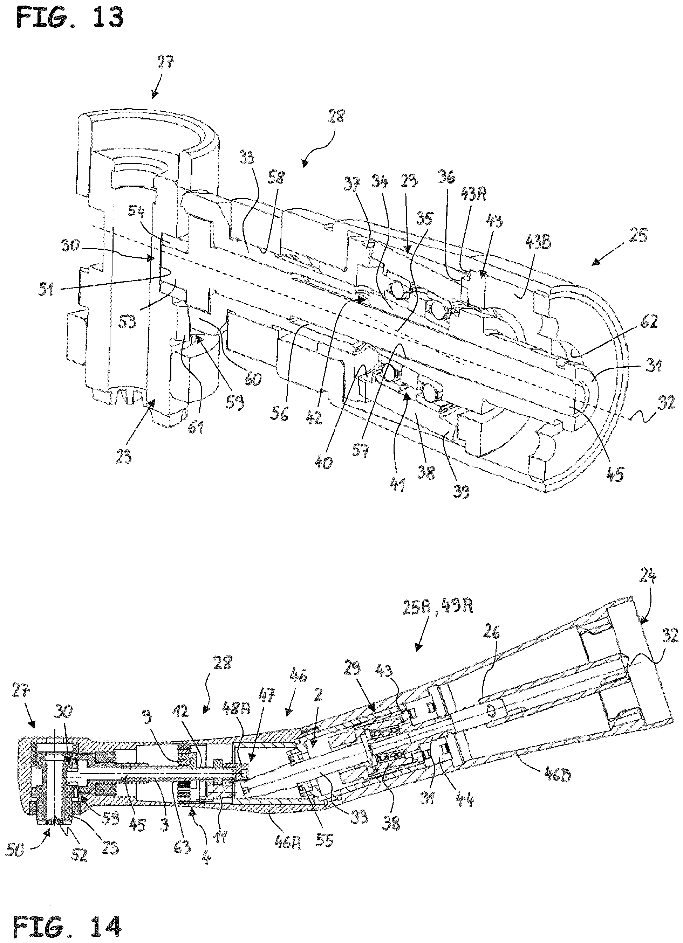

Die Figuren 12 und 14 zeigen zwei Behandlungsvorrichtungen 25, die nicht Gegenstand der Ansprüche ist, und 25A insbesondere in Form eines Handgriffelements oder Handstücks oder Winkelstücks 49, 49A. Im Folgenden werden jene Merkmale beschrieben, die bei den beiden Behandlungsvorrichtungen 25, 25A gleich sind. Die Behandlungsvorrichtungen 25, 25A umfassen: Ein Kopfteil 27 mit einer darin aufgenommenen Werkzeughaltevorrichtung 23 und ein Griffteil 46. Die Werkzeughaltevorrichtung 23 ist beweglich im Kopfteil 27 aufgenommen, insbesondere ist sie in eine, vorzugsweise simultane, Dreh- und Hubbewegung versetzbar. Die Werkzeughaltevorrichtung 23 ist vorzugsweise ausgebildet, ein Werkzeug lösbar zu halten. Gemäß den Figuren 12, 14 ragt das Werkzeug seitlich durch eine Werkzeugaufnahmeöffnung 50 aus dem Kopfteil 27 des Winkelstücks 49, 49A. Das Griffteil 46 umfasst einen kopfnahen Abschnitt 46A und einen gewinkelt oder gebogen dazu angeordneten rückwärtigen Abschnitt 46B.

Eine Antriebswellenanordnung 2 erstreckt sich von einer Kupplungs- oder Anschlussvorrichtung 24 zur Verbindung der Behandlungsvorrichtung 25, 25A oder des Handgriffelements 49, 49A mit einem motorischen Antrieb, insbesondere einem Elektromotor oder einem pneumatisch betreibbaren Motor, und / oder mit einer Steuer- und / oder Regelvorrichtung und / oder mit zumindest einer Medienquelle, insbesondere einer Druckluft- oder Wasserquelle, durch die Behandlungsvorrichtung 25, 25A. Die Antriebswellenanordnung 2 umfasst eine oder mehrere Antriebswellen 11, 12, 26, 31, die zur Übertragung einer unidirektionalen Rotationsbewegung ausgebildet ist / sind. Die unidirektionale Rotationsbewegung wird vorzugsweise von einem mit der Kupplungs- oder Anschlussvorrichtung 24 lösbar verbindbaren motorischen Antrieb zur Verfügung gestellt und über die Kupplungs- oder Anschlussvorrichtung 24 auf die Antriebswellenanordnung 2 übertragen. Die zumindest eine Antriebswelle 11, 12, 26, 31 ist drehbar in Lagerelementen 44, 55, vorzugsweise in Wälz- oder Kugellagern, gelagert.

Beide Behandlungsvorrichtungen 25, 25A weisen des Weiteren eine Getriebeanordnung 28 auf, die mehrere mechanische Getriebe umfasst, um die Werkzeughaltevorrichtung 23 in eine, vorzugsweise simultane, Dreh- und Hubbewegung zu versetzen.

Im Folgenden wird die Getriebeanordnung 28 der Behandlungsvorrichtung 25, die nicht Gegenstand der Ansprüche ist, beschrieben (siehe Figur 12): Die Getriebeanordnung 28 der Behandlungsvorrichtung 25 umfasst zumindest ein Getriebe 29 zur Veränderung, insbesondere Reduktion, der Drehzahl der (vom motorischen Antrieb zur Verfügung gestellten und von zumindest einer Antriebswelle 26, 31 übertragenen) unidirektionalen Rotationsbewegung und ein Exzentergetriebe 30. Somit ist die Werkzeughaltevorrichtung 23 in eine, vorzugsweise simultane, Dreh- und Hubbewegung versetzbar, bei welcher die Drehbewegung durch eine im Wesentlichen kontinuierliche Drehung in eine Drehrichtung um eine Drehachse 52 gebildet ist. Vorzugsweise ist zwischen der Antriebswelle 26 und einer gewinkelt dazu angeordneten Eingangswelle 31 des Getriebes 29 und / oder einer das Exzentergetriebe 30 antreibenden Welle 45 ein weiteres mechanisches Getriebe 47 zur Übertragung und / oder Veränderung der Drehzahl der unidirektionalen Rotationsbewegung vorgesehen, das zum Beispiel als 1:1-Getriebe oder als Untersetzungsgetriebe ausgebildet ist. Das Getriebe 47 umfasst zwei Zahnräder, wobei insbesondere ein Zahnrad 48 direkt an der Exzenterwelle 45 und / oder an einer das Getriebe 29 antreibenden Welle 31 angeordnet ist, so dass die Exzenterwelle 45 und die Welle 31 gemeinsam durch das Getriebe 47 antreibbar sind.

Die Getriebe 29, 30 der Getriebeanordnung 28 der Behandlungsvorrichtung 25 sind in der Figur 13 vergrößert dargestellt. Das Getriebe 29 zur Veränderung, insbesondere Reduktion, der Drehzahl der unidirektionalen Rotationsbewegung umfasst: Eine Eingangswelle 31 mit einer Rotationsachse 32, eine mit der Werkzeughaltevorrichtung 23 verbundene Ausgangswelle 33, einen mit der Eingangswelle 31 verbundenen Fortsatz 34 mit einer Mittelachse 35, wobei die Mittelachse 35 gewinkelt zur Rotationsachse 32 der Eingangswelle 31 angeordnet ist, eine drehfest angeordnete erste Zahnreihe 36 mit mehreren Zähnen, eine drehbar angeordnete und mit der Ausgangswelle 33 verbundene zweite Zahnreihe 37 mit mehreren Zähnen, eine drehbar auf dem mit der Eingangswelle 31 verbundenen Fortsatz 34 angeordnete Hülse 38, die an ihrem ersten Ende eine dritte Zahnreihe 39 und an ihrem zweiten Ende eine vierte Zahnreihe 40 aufweist, wobei die Hülse 38 derart zwischen der ersten Zahnreihe 36 und der zweiten Zahnreihe 37 angeordnet ist, dass zumindest ein Zahn der dritten Zahnreihe 39 mit zumindest einem Zahn der ersten Zahnreihe 36 und zumindest ein Zahn der vierten Zahnreihe 40 mit zumindest einem Zahn der zweiten Zahnreihe 37 kämmt. Auf dem mit der Eingangswelle 31 verbundenen Fortsatz 34 ist zumindest eine Lagervorrichtung 41 vorgesehen, zum Beispiel zumindest ein Wälz- oder Kugellager, so dass die auf dem Fortsatz 34 angeordnete Hülse 38 relativ zum Fortsatz 34 drehbar ist. Ein Ende des Fortsatzes 34 ist als freies Ende 42 ausgebildet, das sich frei und ungelagert über die Lagervorrichtung 41 hinaus in Richtung der Werkzeughaltevorrichtung 23 erstreckt. Des Weiteren ist ein plattenförmiger Träger 43 mit einer ersten Grundfläche 43A und einer im Wesentlichen parallel zur ersten Grundfläche 43A angeordneten zweiten Grundfläche 43B vorgesehen. An der ersten Grundfläche 43A ist die drehfest angeordnete erste Zahnreihe 36 derart vorgesehen, dass ihre Zähne in Richtung der zweiten Zahnreihe 37 weisen, wobei vorzugsweise die zweite Grundfläche 43B als Lagersitz für das die Eingangswelle 31 lagernde Lagerelement 44 ausgebildet ist. Der plattenförmiger Träger 43 weist eine, vorzugsweise zentrale, Bohrung 62 auf, durch welche sich zum Beispiel die Eingangswelle 31 oder eine das Exzentergetriebe 30 antreibende Welle 45 erstreckt. Alle Zahnreihen 36, 37, 39, 40 sind insbesondere ring- oder kreisförmig ausgebildet.

Aufgrund der Neigung des Fortsatzes 34 von etwa 5° - 15° in Bezug auf die Rotationsachse 32 sind der Fortsatz 34 und die darauf angeordnete Hülse 38 bei Betrieb, d.h. Übertragung der unidirektionalen Rotationsbewegung, in eine taumelnde Bewegung versetzbar. Damit greifen bei Rotation der Hülse 38 jeweils nur wenige Zähne, zumindest aber je ein Zahn, der ersten und dritten Zahnreihe 36, 39 sowie der zweiten und vierten Zahnreihe 37, 40 ineinander, um Eingriffsabschnitte zu bilden. Diese Eingriffsabschnitte bewegen sich oder laufen während der Rotation der Hülse 38 entlang der Zahnreihen 36, 37, 39, 40. Die Eingriffsabschnitte der kämmenden Zahnreihen 36, 39 und 37, 40 liegt aufgrund der geneigten Anordnung der Hülse 38 schräg gegenüber: Befindet sich zum Beispiel der Eingriffsabschnitt der Zahnreihen 37, 40 links unten, so ist der Eingriffsabschnitt der Zahnreihen 36, 39 rechts oben, siehe Figur 13.

Die Anzahl der Zähne der Zahnreihen 36, 37, 39, 40 liegt zum Beispiel bei jeweils etwa 10 - 30, wobei in Abhängigkeit der tatsächlichen Anzahl das gewünschte Über- oder Untersetzungsverhältnis einstellbar ist. Das Verhältnis der Drehzahl R1 der Eingangswelle 31 und der Drehzahl R2 der Ausgangswelle 33 ist durch folgende Beziehung definiert: R2/R1 = 1 - (A*B) / (C*D), mit A = Anzahl der Zähne der ersten Zahnreihe 36, B = Anzahl der Zähne der vierten Zahnreihe 40, C = Anzahl der Zähne der zweiten Zahnreihe 37, D = Anzahl der Zähne der dritten Zahnreihe 39.

Zwischen der Ausgangswelle 33 und der Werkzeughaltevorrichtung 23 ist eine Verzahnung 59 vorgesehen, um die Drehbewegung der Ausgangswelle 33 auf die Werkzeughaltevorrichtung 23 zu übertragen. Die Verzahnung umfasst ein Zahnrad 60 an der Ausgangswelle 33 und ein Zahnrad 61 an der Werkzeughaltevorrichtung 23, insbesondere an einer Buchse oder Hülse der Werkzeughaltevorrichtung 23.

Das Exzentergetriebe 30 umfasst zum Beispiel einen Exzenterstift 53, vorzugsweise in einer Lagerbuchse 54 gelagert, und eine Aufnahme oder einen Rücksprung 51 für den Exzenterstift 53, vorzugsweise an der Werkzeughaltevorrichtung 23. Eine Welle 45 ist über die Antriebswelle 26 in Drehung versetzbar, um das Exzentergetriebe 30 anzutreiben. Das Exzentergetriebe 30 versetzt die Werkzeughaltevorrichtung 23 in eine Hin- und Herbewegung oder Hubbewegung entlang der Achse 52. Vorzugsweise ist zumindest ein Teil des Exzentergetriebes 30, insbesondere Exzenterstift 53, direkt an der Welle 45 vorgesehen. Die Welle 45 durchsetzt vorzugsweise das Getriebe 29 zur Veränderung der Drehzahl der unidirektionalen Rotationsbewegung. Insbesondere sind die Ausgangswelle 33 einschließlich des Zahnrades 60, der Fortsatz 34 und die Eingangswelle 31 als Hohlwellen ausgebildet und weisen entsprechende Bohrungen 56, 57 auf, in denen die Welle 45 aufgenommen ist. Vorzugsweise sind die Eingangswelle 31 und die Exzenterwelle 45 drehfest miteinander verbunden, so dass sie gemeinsam, zum Beispiel durch eine gemeinsame Antriebswelle 26, ein gemeinsames Getriebe 47 oder einen gemeinsamen motorischen Antrieb, antreibbar sind. Vorzugsweise sind die Ausgangswelle 33 und die Exzenterwelle 45 relativ zueinander drehbar ausgebildet, wobei insbesondere ein Lager 58, zum Beispiel ein Gleitlager, an der Innenseite der Ausgangswelle 33 und der Außenseite der Exzenterwelle 45 vorgesehen ist.

Die Getriebeanordnung der in der Figur 14 dargestellte Behandlungsvorrichtung 25A umfasst ein Exzentergetriebe 30, ein Getriebe 4, welches ausgebildet ist, die, insbesondere von der Antriebswellenanordnung 2, 26 übertragene, unidirektionale Rotationsbewegung in eine oszillierende Rotationsbewegung umzuwandeln und ein Getriebe 29 zur Veränderung, insbesondere Reduktion, der Drehzahl der unidirektionalen Rotationsbewegung. Das Exzentergetriebe 30 entspricht in seinem Aufbau und seiner Funktion dem Exzentergetriebe 30 der Figuren 12, 13; zur Vermeidung von Wiederholungen wird das Exzentergetriebe 30 daher nicht noch einmal beschrieben.

Das Getriebe 4 zur Wandlung einer unidirektionalen Rotationsbewegung in eine oszillierende Rotationsbewegung, wobei die oszillierende Rotationsbewegung eine abwechselnde Rotation des Werkzeugs in eine erste Drehrichtung 21 um einen ersten Drehwinkel und in eine zweite Drehrichtung 22, welche der ersten Drehrichtung 21 im Wesentlichen entgegengesetzt ist, um einen zweiten Drehwinkel 22 umfasst, wobei der erste und der zweite Drehwinkel 21, 22 vorzugsweise unterschiedliche Beträge aufweisen, entspricht in seinem Aufbau und seiner Funktion weitgehen dem Getriebe der Figuren 1 - 7, so dass im Folgenden nur die Unterschiede beschrieben werden: Aus der Figur 14 ist zu erkennen, dass das Getriebe 4 in dem kopfnahen Abschnitt 46A des Griffteils 46 angeordnet ist. Entsprechend erstreckt sich die Exzenterwelle 45 durch das Getriebe 4 und durch die als Hohlwelle ausgebildete Abtriebswelle 3. Das Getriebe 4, insbesondere das zentrale Zahnrad 9, 9A des Getriebes 4, weisen demgemäß eine Bohrung 63 für die Exzenterwelle 45 auf.

Ein mechanisches Getriebe 47 zur Übertragung und / oder Veränderung der Drehzahl der unidirektionalen Rotationsbewegung, das zum Beispiel als 1:1-Getriebe oder als Untersetzungsgetriebe ausgebildet ist, verbindet das Getriebe 4 und das Exzentergetriebe 30 mit der Antriebswelle 26. Das Getriebe 47 umfasst zwei Zahnräder, wobei insbesondere ein Zahnrad 48A direkt an der Exzenterwelle 45 und / oder an einer das Getriebe 4 antreibenden Welle 11, 12 angeordnet ist, so dass die Exzenterwelle 45 und die Welle 11, 12 gemeinsam durch das Getriebe 47 antreibbar sind. Vorzugsweise sind die Exzenterwelle 45 und die Welle 11, 12 drehfest miteinander verbunden.

Das Getriebe 29 zur Veränderung, insbesondere Reduktion, der Drehzahl der unidirektionalen Rotationsbewegung entspricht in seinem Aufbau und seiner Funktion ebenfalls weitgehen dem Getriebe der Figuren 12, 13, so dass im Folgenden nur die Unterschiede beschrieben werden: Aus der Figur 14 ist zu erkennen, dass das Getriebe 29 in dem rückwärtigen Abschnitt 46B des Griffteils 46 angeordnet ist. Da die Exzenterwelle 45 im kopfnahen Abschnitt 46A des Griffteils 46 angeordnet ist, müssen dem entsprechend die Ausgangswelle 33, der Fortsatz 34 oder die Eingangswelle 31 nicht als Hohlwelle ausgebildet sein, sondern zumindest eines dieser Bauteile kann auch als Vollwelle hergestellt sein. An dem kopfnahen Ende der Ausgangswelle 33 ist zumindest ein Teil des Getriebes 47 vorgesehen, so dass eine drehzahlreduzierte, unidirektionale Rotationsbewegung auf die Getriebe 4, 30 übertragbar ist.

Die Behandlungsvorrichtung 25A oder das Handgriffelement 49A sind somit aufgrund der Getriebeanordnung 28 mit den drei mechanischen Getrieben 4, 29, 30 ausgebildet, welche die von der Antriebswelle 26 empfangene oder übertragene unidirektionale Rotationsbewegung derart wandeln, dass die Werkzeughaltevorrichtung 23 in eine, vorzugsweise simultane, Hub- und oszillierende Rotationsbewegung mit in Bezug auf die Drehzahl der von der Antriebswelle 26 übertragenen, unidirektionalen Rotationsbewegung reduzierter Drehzahl versetzbar ist.

Die Erfindung ist nicht auf die beschriebenen Ausführungsbeispiele beschränkt, sondern umfasst alle Ausführungen, die das prinzipielle, sinngemäße Funktionsprinzip der Erfindung anwenden oder beinhalten. So ist es gemäß einem alternativen Ausführungsbeispiel auch möglich, die Abtriebswelle 3 direkt und / oder fest mit dem ersten Element 5 zur Umwandlung der von der Antriebswellenanordnung 2 übertragenen, unidirektionalen Rotationsbewegung in eine Oszillationsbewegung, insbesondere in eine oszillierende Pendel- oder Schwenkbewegung, insbesondere mit dem Exzentergetriebe 5A, vorzugsweise mit dem Hohlrad 7 zu verbinden. Des Weiteren ist gemäß diesem Ausführungsbeispiel ein Teil des ersten Elements 5, insbesondere des Exzentergetriebes 5A, zum Beispiel der Exzenter 88 oder die Aufnahme 17, an einem Träger des zumindest einen peripheren Zahnrads 8, zum Beispiel an dem Verbindungselement 20, vorgesehen. Vorzugsweise ist die Aufnahme 17 an dem Träger des zumindest einen peripheren Zahnrads 8 und der, insbesondere stiftförmige, Exzenter 88 an der ersten Welle 11 angeordnet.

Des Weiteren sind alle Merkmale aller beschriebenen und dargestellten Ausführungsbeispiele miteinander kombinierbar, insbesondere ist das mechanische Getriebe 4 an unterschiedlichen Orten in den Behandlungsvorrichtungen 14, 25A positionierbar.

## Patentansprüche

1. Medizinisches, insbesondere dentales oder chirurgisches, Handgriffelement (14A), das insbesondere für endodontische Behandlungen ausgebildet ist, mit einer Antriebsvorrichtung (1, 1A) für ein medizinisches, insbesondere dentales oder chirurgisches, Werkzeug, wobei die Antriebsvorrichtung (1, 1A) ausgebildet ist, das Werkzeug in eine oszillierende Rotationsbewegung zu versetzen, wobei die oszillierende Rotationsbewegung eine abwechselnde Rotation des Werkzeugs in eine erste Drehrichtung um einen ersten Drehwinkel und in eine zweite Drehrichtung, welche der ersten Drehrichtung im Wesentlichen entgegengesetzt ist, um einen zweiten Drehwinkel umfasst, wobei der erste und der zweite Drehwinkel unterschiedliche Beträge aufweisen, und wobei die Antriebsvorrichtung (1, 1A) umfasst: eine Antriebswellenanordnung (2) und eine Abtriebswelle (3), **gekennzeichnet dadurch, dass** die Antriebswellenanordnung (2) zur Übertragung einer unidirektionalen Rotationsbewegung ausgebildet ist, und durch ein durch die Antriebswellenanordnung (2) antreibbares, in dem Handgriffelement (14A) angeordnetes, mechanisches Getriebe (4), welches ausgebildet ist, die von der Antriebswellenanordnung (2) übertragene unidirektionale Rotationsbewegung in eine oszillierende Rotationsbewegung umzuwandeln und auf die Abtriebswelle (3) zu übertragen.

2. Handgriffelement (14A) nach Anspruch 1, **dadurch gekennzeichnet, dass** das mechanische Getriebe (4) ein erstes Element (5) zur Umwandlung der von der Antriebswellenanordnung (2) übertragenen, unidirektionalen Rotationsbewegung in eine Oszillationsbewegung, insbesondere in eine oszillierende Pendel- oder Schwenkbewegung, und ein zweites Element (6) zur Übertragung der unidirektionalen Rotationsbewegung aufweist.

3. Handgriffelement (14A) nach Anspruch 1 oder 2, **dadurch gekennzeichnet, dass** das medizinische, insbesondere dentale oder chirurgische, Handgriffelement (14A) des Weiteren aufweist: eine Werkzeughaltevorrichtung (23) zum lösbaren Halten eines mit dem Handgriffelement (14A) verbindbaren Werkzeugs, wobei die Werkzeughaltevorrichtung (23) mit der Abtriebswelle (3) der Antriebsvorrichtung (1, 1A) verbunden ist, so dass die oszillierende Rotationsbewegung auf die Werkzeughaltevorrichtung (23) übertragbar ist, und eine Kupplungsvorrichtung (24) zur Verbindung mit einem motorischen Antrieb, wobei das mechanische Getriebe (4) in dem Handgriffelement (14A) zwischen der Werkzeughaltevorrichtung (23) und der Kupplungsvorrichtung (24) angeordnet ist.

4. Handgriffelement (14A) nach Anspruch 2 oder 3, **dadurch gekennzeichnet, dass** das erste Element (5) zur Umwandlung der von der Antriebswellenanordnung (2) übertragenen, unidirektionalen Rotationsbewegung in eine Oszillationsbewegung, insbesondere in eine oszillierende Pendel- oder Schwenkbewegung, ein Exzentergetriebe (5A) aufweist.

5. Handgriffelement (14A) nach Anspruch 4, **dadurch gekennzeichnet, dass** zumindest ein Teil des Exzentergetriebes (5A) an einem Hohlrad (7) des mechanischen Getriebes (4) vorgesehen ist, wobei das Hohlrad (7) vorzugsweise relativ zur Antriebswellenanordnung (2) drehbar ausgebildet ist.

6. Handgriffelement (14A) nach einem der Ansprüche 2 bis 5, **dadurch gekennzeichnet, dass** das zweite Element (6) zur Übertragung der unidirektionalen Rotationsbewegung mehrere Zahnräder (8, 8A, 9, 9A) aufweist.

7. Handgriffelement (14A) nach Anspruch 6, **dadurch gekennzeichnet, dass** zumindest eines der Zahnräder (8, 8A, 9, 9A), vorzugsweise drehbar, an der Abtriebswelle (3) befestigt ist, wobei insbesondere die von dem ersten Element (5) erzeugte Oszillationsbewegung über dieses zumindest eine mit der Abtriebswelle (3) verbundene Zahnrad (8, 8A, 9, 9A) auf die Abtriebswelle (3) übertragbar ist.

8. Handgriffelement (14A) nach Anspruch 6 oder 7, **dadurch gekennzeichnet, dass** zumindest eines der Zahnräder (8, 8A, 9, 9A) des zweiten Elements (6) zur Übertragung der unidirektionalen Rotationsbewegung in dem Hohlrad (7) des Exzentergetriebes (5A) angeordnet ist.

9. Handgriffelement (14A) nach Anspruch 8, **dadurch gekennzeichnet, dass** das Hohlrad (7) eine Innenverzahnung (10) aufweist, welche mit dem zumindest einen, in dem Hohlrad (7) angeordneten Zahnrad (8, 8A, 9, 9A) kämmt.

10. Handgriffelement (14A) nach einem der Ansprüche 6 bis 9, **dadurch gekennzeichnet, dass** um ein drehfest mit der Antriebswellenanordnung (2) oder mit der Abtriebswelle (3) verbundenes, vorzugsweise zentrales, erstes Zahnrad (8, 8A, 9, 9A) zumindest ein drehbar mit der Antriebswellenanordnung (2) oder mit der Abtriebswelle (3) verbundenes, vorzugsweise peripheres, zweites Zahnrad (8, 8A, 9, 9A) rotiert, wobei das zumindest eine zweite Zahnrad (8, 8A, 9, 9A) mit der Innenverzahnung (10) des Hohlrads (7) kämmt.

11. Handgriffelement (14A) nach einem der Ansprüche 2 - 10, **dadurch gekennzeichnet, dass** die Antriebswellenanordnung (2) eine erste Antriebswelle (11) und eine zweite Antriebswelle (12) aufweist, wobei die erste Antriebswelle (11) mit dem ersten Element (5) des mechanischen Getriebes (4) zur Umwandlung der von der Antriebswellenanordnung (2) übertragenen, unidirektionalen Rotationsbewegung in eine Oszillationsbewegung, insbesondere in eine oszillierende Pendel- oder Schwenkbewegung, und die zweite Antriebswelle (12) mit dem zweiten Element (6) des mechanischen Getriebes (4) zur Übertragung der unidirektionalen Rotationsbewegung verbunden ist.

12. Handgriffelement (14A) nach einem der Ansprüche 2 - 11, **dadurch gekennzeichnet, dass** die Abtriebswelle (3) direkt und / oder fest mit dem zweiten Element (6) zur Übertragung der unidirektionalen Rotationsbewegung, insbesondere mit zumindest einem der Zahnräder (8, 8A, 9, 9A) des zweiten Element (6), verbunden ist.

13. Handgriffelement (14A) nach einem der Ansprüche 2 - 11, **dadurch gekennzeichnet, dass** die Abtriebswelle (3) direkt und / oder fest mit dem ersten Element (5) zur Umwandlung der von der Antriebswellenanordnung (2) übertragenen, unidirektionalen Rotationsbewegung in eine Oszillationsbewegung, insbesondere in eine oszillierende Pendel- oder Schwenkbewegung, insbesondere mit dem Exzentergetriebe (5A), vorzugsweise mit dem Hohlrad (7), verbunden ist und dass ein Teil des ersten Elements (5), insbesondere des Exzentergetriebes (5A), zum Beispiel der Exzenter (88) oder die Aufnahme (17), an einem Träger (20) eines peripheren Zahnrads (8) des zweiten Elements (6) vorgesehen ist.

14. Handgriffelement (14A) nach einem der vorstehenden Ansprüche, **dadurch gekennzeichnet, dass**
das medizinische, insbesondere dentale oder chirurgische, Handgriffelement (14A) des Weiteren einen motorischen Antrieb, insbesondere einen Elektromotor oder einen pneumatisch betreibbaren Motor, und / oder eine Kupplungsvorrichtung (24) zur Verbindung mit einem motorischen Antrieb und / oder mit einer Steuer- und / oder Regelvorrichtung und / oder mit zumindest einer Medienquelle aufweist.

15. Handgriffelement (14A) nach einem der vorstehenden Ansprüche, **gekennzeichnet durch** eine das mechanische Getriebe (4) umgebende Hülse (15) mit einem Lager (16), insbesondere einem Gleit- oder Nadellager, **durch** welches das mechanische Getriebe (4), vorzugsweise das Exzentergetriebe (5A) des mechanischen Getriebes (4), insbesondere das Hohlrad (7) des Exzentergetriebes (5A) des mechanischen Getriebes (4), drehbar in dem Handgriffelement (14A) gelagert ist.

## Claims

1. A medical, in particular dental or surgical handle element (14A), which is designed in particular for endodontic treatments, having a drive device (1, 1A) for a medical, in particular dental or surgical tool, wherein the drive device (1, 1A) is designed to set the tool in an oscillating rotational movement, wherein the oscillating rotational movement comprises an alternating rotation of the tool about a first angle of rotation in a first direction of rotation and about a second angle of rotation in a second direction of rotation, which is essentially opposite the first direction of rotation, wherein the first and the second angle of rotation are of different amounts, and wherein the drive device (1, 1A) comprises: a drive shaft arrangement (2) and an output shaft (3), **characterized in that**
the drive shaft arrangement (2) is designed for transmitting a unidirectional rotational movement and by a mechanical gear (4) which can be driven by the drive shaft arrangement (2), is arranged in the handle element (14A) and is designed to convert the unidirectional rotational movement transmitted by the drive shaft arrangement (2) into an oscillating rotational movement and to transmit it to the output shaft (3).

2. The handle element (14A) according to Claim 1, **characterized in that**
the mechanical gear (4) comprises a first element (5) for converting the unidirectional rotational movement transmitted by the drive shaft arrangement (2) into an oscillating movement, in particular into an oscillating pendulum movement or pivoting movement, and a second element (6) for transmitting the unidirectional rotational movement.

3. The handle element (14A) according to Claim 1 or 2, **characterized in that**
the medical, in particular dental or surgical handle element (14A) comprises in addition: a tool-holding device (23) for releasably holding a tool which can be coupled to the handle element (14A), wherein the tool-holding device (23) is connected to the output shaft (3) of the drive device (1, 1A), so that the oscillating rotational movement can be transmitted to the tool-holding device (23), and a coupling device (24) for coupling to a motor drive, wherein the mechanical gear (4) is arranged in the handle element (14A) between the tool-holding device (23) and the coupling device (24).

4. The handle element (14A) according to Claim 2 or 3, **characterized in that**
the first element (5) for converting the unidirectional rotational movement transmitted by the drive shaft arrangement (2) into an oscillating movement, in particular an oscillating pendulum movement or pivoting movement, comprises an eccentric gear (5A).

5. The handle element (14A) according to Claim 4, **characterized in that**
at least a part of the eccentric gear (5A) is provided on an internal gear (7) of the mechanical gear (4), wherein the internal gear (7) is preferably designed to be rotatable in relation to the drive shaft arrangement (2).

6. The handle element (14A) according to any one of Claims 2 to 5, **characterized in that**
the second element (6) for transmitting the unidirectional rotational movement comprises a plurality of gearwheels (8, 8A, 9, 9A).

7. The handle element (14A) according to Claim 6, **characterized in that** at least one of the gearwheels (8, 8A, 9, 9A) is mounted on the output shaft (3), preferably rotatably, wherein in particularr the oscillating movement generated by the first element (5) can be transmitted to the output shaft (3) via this at least one gearwheel (8, 8A, 9, 9A) connected to the output shaft (3).

8. The handle element (14A) according to Claim 6 or 7, **characterized in that**
at least one of the gearwheels (8, 8A, 9, 9A) of the second element (6) for transmitting the unidirectional rotational movement is arranged in the internal gear (7) of the eccentric gear (5A).

9. The handle element (14A) according to Claim 8, **characterized in that**
the internal gear (7) comprises internal gear teeth (10) which meshes with the at least one gearwheel (8, 8A, 9, 9A) arranged in the internal gear (7).

10. The handle element (14A) according to any one of Claims 6 to 9, **characterized in that**
at least one second gearwheel (8, 8A, 9, 9A), which is preferably peripheral and is rotatably connected to the drive shaft arrangement (2) or to the output shaft (3), rotates around a first gearwheel (8, 8A, 9, 9A), which is preferably centrally arranged and which is connected non-rotatably to the drive shaft arrangement (2) or to the output shaft (3), wherein the at least one second gearwheel (8, 8A, 9, 9A) meshes with the internal gear teeth (10) of the internal gear (7).

11. The handle element (14A) according to any one of Claims 2 - 10, **characterized in that**
the drive shaft arrangement (2) comprises a first drive shaft (11) and a second drive shaft (12), wherein the first drive shaft (11) is connected to the first element (5) of the mechanical gear (4) for converting the unidirectional rotational movement transmitted by the drive shaft arrangement (2) into an oscillating movement, in particular into an oscillating pendulum movement or swiveling movement, and the second drive shaft (12) is connected to the second element (6) of the mechanical gear (4) for transmitting the unidirectional rotational movement.

12. The handle element (14A) according to any one of Claims 2 - 11, **characterized in that**
the output shaft (3) is connected directly and/ or fixedly to the second element (6) for transmitting the unidirectional rotational movement, in particular to at least one of the gearwheels (8, 8A, 9, 9A) of the second element (6).

13. The handle element (14A) according to any one of Claims 2 - 11, **characterized in that**
the output shaft (3) is connected directly and/or fixedly to the first element (5) for converting the unidirectional rotational movement transmitted by the drive shaft arrangement (2) into an oscillating movement, in particular into an oscillating pendulum movement or pivoting movement, in particular being connected to the eccentric gear (5A), preferably being connected to the internal gear (7), and wherein a part of the first element (5), in particular of the eccentric gear (5A), for example, the eccentric element (88) or the receptacle (17) is provided on a carrier (20) of a peripheral gearwheel (8) of the second element (6).

14. The handle element (14A) according to any one of the preceding Claims, **characterized in that**
the medical, in particular dental or surgical handle element (14A) comprises in addition a motor drive, in particular an electric motor or a pneumatically drivable motor, and/ or a coupling device (24) for coupling to a motor drive and/ or to a controlling and/ or regulating device and/ or to at least one media source.

15. The handle element (14A) according to any one of the preceding Claims, **characterized by** a sleeve (15) surrounding the mechanical gear (4) and having a bearing (16), in particular a sliding bearing or a needle bearing, through which the mechanical gear (4), preferably the eccentric gear (5A) of the mechanical gear (4), in particular the internal gear (7) of the eccentric gear (5A) of the mechanical gear (4), is rotatably supported in the handle element (14A).

## Revendications

1. Elément de pièce à main (14A) médical, en particulier dentaire ou chirurgical, lequel est en particulier réalisé pour des traitements endodontiques, avec un dispositif d'entraînement (1, 1A) pour un outil médical, en particulier dentaire ou chirurgical, dans lequel le dispositif d'entraînement (1, 1A) est réalisé pour mettre l'outil en mouvement de rotation oscillant, dans lequel le mouvement de rotation oscillant comprend une rotation alternative de l'outil dans une première direction de rotation autour d'un premier angle de rotation et dans une deuxième direction de rotation, qui est sensiblement opposée à la première direction de rotation, autour d'un deuxième angle de rotation, dans lequel les premier et deuxième angles de rotation présentent des valeurs différentes, et dans lequel le dispositif d'entraînement (1, 1A) comprend: un ensemble d'arbres d'entraînement (2) et un arbre entraîné (3),
**caractérisé en ce que**
l'ensemble d'arbres d'entraînement (2) est réalisé pour la transmission d'un mouvement de rotation unidirectionnel, et par une transmission mécanique (4), disposée dans l'élément de pièce à main (14A), pouvant être entraînée par l'ensemble d'arbres d'entraînement (2), laquelle est réalisée pour convertir le mouvement de rotation unidirectionnel transmis par l'ensemble d'arbres d'entraînement (2) en un mouvement de rotation oscillant et le transmettre à l'arbre entraîné (3).

2. Elément de pièce à main (14A) selon la revendication 1, **caractérisé en ce que**
la transmission mécanique (4) présente un premier élément (5) pour convertir le mouvement de rotation unidirectionnel transmis par l'ensemble d'arbres d'entraînement (2) en un mouvement d'oscillation, en particulier en un mouvement oscillant de pivotement ou pendulaire, et un deuxième élément (6) pour la transmission du mouvement de rotation unidirectionnel.

3. Elément de pièce à main (14A) selon la revendication 1 ou 2, **caractérisé en ce que** l'élément de pièce à main (14A) médical, en particulier dentaire ou chirurgical, présente en outre: un dispositif de porte-outil (23) pour porter de manière amovible un outil pouvant être relié à l'élément de pièce à main (14A), dans lequel le dispositif de porte-outil (23) est relié à l'arbre entraîné (3) du dispositif d'entraînement (1, 1A) de manière à ce que le mouvement de rotation oscillant puisse être transmis au dispositif de porte-outil (23), et un dispositif d'accouplement (24) pour le raccordement à un entraînement motorisé, dans lequel la transmission mécanique (4) est disposée dans l'élément de pièce à main (14A) entre le dispositif de porte-outil (23) et le dispositif d'accouplement (24).

4. Elément de pièce à main (14A) selon la revendication 2 ou 3, **caractérisé en ce que**
le premier élément (5) pour convertir le mouvement de rotation unidirectionnel transmis par l'ensemble d'arbres d'entraînement (2) en un mouvement d'oscillation, en particulier en un mouvement oscillant de pivotement ou pendulaire, présente un engrenage à excentrique (5A).

5. Elément de pièce à main (14A) selon la revendication 4, **caractérisé en ce qu'**au moins une partie de l'engrenage à excentrique (5A) est prévue sur une roue à denture intérieure (7) de la transmission mécanique (4), dans lequel la roue à denture intérieure (7) est de préférence réalisée de manière rotative relativement à l'ensemble d'arbres d'entraînement (2).

6. Elément de pièce à main (14A) selon l'une des revendications 2 à 5, **caractérisé en ce que** le deuxième élément (6) pour la transmission du mouvement de rotation unidirectionnel présente plusieurs roues dentées (8, 8A, 9, 9A).

7. Elément de pièce à main (14A) selon la revendication 6, **caractérisé en ce qu'**au moins l'une des roues dentées (8, 8A, 9, 9A) est fixée de préférence de manière rotative sur l'arbre entraîné (3), dans lequel en particulier le mouvement d'oscillation généré par le premier élément (5) peut être transmis, par l'intermédiaire de cette au moins une roue dentée (8, 8A, 9, 9A) reliée à l'arbre entraîné (3), à l'arbre entraîné (3).

8. Elément de pièce à main (14A) selon la revendication 6 ou 7, **caractérisé en ce qu'**au moins l'une des roues dentées (8, 8A, 9, 9A) du deuxième élément (6) pour la transmission du mouvement de rotation unidirectionnel est disposée dans la roue à denture intérieure (7) de l'engrenage à excentrique (5A).

9. Elément de pièce à main (14A) selon la revendication 8, **caractérisé en ce que** la roue à denture intérieure (7) présente une denture intérieure (10) qui s'engrène avec l'au moins une roue dentée (8, 8A, 9, 9A) disposée dans la roue à denture intérieure (7).

10. Elément de pièce à main (14A) selon l'une des revendications 6 à 9, **caractérisé en ce que**, autour d'une première roue dentée (8, 8A, 9, 9A) de préférence centrale reliée de manière solidaire en rotation à l'ensemble d'arbres d'entraînement (2) ou à l'arbre entraîné (3), au moins une deuxième roue dentée (8, 8A, 9, 9A) de préférence périphérique reliée de manière rotative à l'ensemble d'arbres d'entraînement (2) ou à l'arbre entraîné (3) est en rotation, dans lequel l'au moins une deuxième roue dentée (8, 8A, 9, 9A) s'engrène avec la denture intérieure (10) de la roue à denture intérieure (7).

11. Elément de pièce à main (14A) selon l'une des revendications 2-10, **caractérisé en ce que** l'ensemble d'arbres d'entraînement (2) présente un premier arbre d'entraînement (11) et un deuxième arbre d'entraînement (12), dans lequel le premier arbre d'entraînement (11) est relié au premier élément (5) de la transmission mécanique (4) pour convertir le mouvement de rotation unidirectionnel transmis par l'ensemble d'arbres d'entraînement (2) en un mouvement d'oscillation, en particulier un mouvement oscillant de pivotement ou pendulaire, et le deuxième arbre d'entraînement (12) étant relié au deuxième élément (6) de la transmission mécanique (4) pour la transmission du mouvement de rotation unidirectionnel.

12. Elément de pièce à main (14A) selon l'une des revendications 2-11, **caractérisé en ce que** l'arbre entraîné (3) est relié directement et/ou de manière serrée au deuxième élément (6) pour la transmission du mouvement de rotation unidirectionnel, en particulier à au moins l'une des roues dentées (8, 8A, 9, 9A) du deuxième élément (6).

13. Elément de pièce à main (14A) selon l'une des revendications 2-11, **caractérisé en ce que** l'arbre entraîné (3) est relié directement et/ou de manière serrée au premier élément (5) pour la conversion du mouvement de rotation unidirectionnel transmis par l'ensemble d'arbres d'entraînement (2) en un mouvement d'oscillation, en particulier en un mouvement oscillant de pivotement ou pendulaire, en particulier à l'engrenage à excentrique (5A), de préférence à la roue à denture intérieure (7), et **en ce qu'**une partie du premier élément (5), en particulier de l'engrenage à excentrique (5A), par exemple l'excentrique (88) ou le logement (17), est prévue sur un support (20) d'une roue dentée périphérique (8) du deuxième élément (6).

14. Elément de pièce à main (14A) selon l'une des revendications précédentes, **caractérisé en ce que**
l'élément de pièce à main (14A) médical, en particulier dentaire ou chirurgical, présente en outre un entraînement motorisé, en particulier un moteur électrique ou un moteur à fonctionnement pneumatique, et/ou un dispositif d'accouplement (24) pour le raccordement à un entraînement motorisé et/ou à un dispositif de commande et/ou de régulation et/ou à au moins une source de milieux.

15. Elément de pièce à main (14A) selon l'une des revendications précédentes, **caractérisé par** un manchon (15) entourant la transmission mécanique (4) avec un palier (16), en particulier un palier lisse ou à aiguilles, grâce auquel la transmission mécanique (4), de préférence l'engrenage à excentrique (5A) de la transmission mécanique (4), en particulier la roue à denture intérieure (7) de l'engrenage à excentrique (5A) de la transmission mécanique (4), est monté(e) de manière rotative dans l'élément de pièce à main (14A).
